# EUROPEAN PATENT APPLICATION

(11) **EP 4 517 956 A1**
(43) Date of publication of application: **05.03.2025**
(21) Application number: 23794783.3
(22) Date of filing: 08.03.2023
(51) Int. Cl.: H01M 50/204

(54) **BATTERY CABINET**

(30) Priority: 29.04.2022 CN 202221057142 U
(71) Applicant: BYD Company Limited, Shenzhen, Guangdong 518118 (CN)
(72) Inventor: ZHOU, Lei, Shenzhen, Guangdong 518118 (CN); ZHOU, Ya, Shenzhen, Guangdong 518118 (CN); HUANG, Zhixue, Shenzhen, Guangdong 518118 (CN); DAI, Xiangjun, Shenzhen, Guangdong 518118 (CN)
(74) Representative: Mathys & Squire
(86) International application number: PCT/CN2023/080224
(87) International publication number: WO 2023/207347

(57) **Abstract**

A energy storage cabinet (200), The energy storage cabinet (200) comprises: a cabinet (60) in which a first space (40) and a second space (41) are formed; a plurality of battery modules (201) which are arranged in the first space (40), the plurality of battery modules (201) being stacked in a first direction of the energy storage cabinet (200), and the first space (40) and the second space (41) being arranged side by side in a second direction perpendicular to the first direction; and a control unit (1000) which is arranged in the second space (41) and is electrically connected to the battery modules (201).

## Description

### CROSS-REFERENCE TO RELATED APPLICATIONS

The present disclosure claims priority to Chinese Patent Application No. 2022210571428 filed on April 29, 2022, which is incorporated herein by reference in its entirety.

### FIELD

The present disclosure relates to the field of energy storage cabinets, and in particular, to a energy storage cabinet.

### BACKGROUND

In related technologies, a space is defined in the existing energy storage cabinet for installing battery modules and control unit. However, interference can easily occur between the battery modules and the control unit, and the assembly of components in the energy storage cabinet is not compact, leading to a larger volume of the energy storage cabinet.

### SUMMARY

The present disclosure aims to solve at least one of the technical problems existing in the prior art. To this end, one objective of this disclosure is to propose a energy storage cabinet that can separate the control unit from the battery modules to avoid interference between them, and also enable compact assembly of the control unit and multiple battery modules, which is conducive to reducing the volume of the energy storage cabinet.

The energy storage cabinet according to the present disclosure including: a cabinet body, within which a first space and a second space are formed; a plurality of battery modules, which are arranged within the first space, are stacked in a first direction of the energy storage cabinet, the first space and the second space are arranged side by side in a second direction perpendicular to the first direction; A control unit, which is arranged within the second space and is electrically connected to the battery modules.

The energy storage cabinet according to the present disclosure, by arranging the control unit and the battery modules in separate spaces, can separate the control unit from the battery modules to avoid interference between them, and also enable compact assembly of the control unit and multiple battery modules, which is conducive to reducing the overall volume of the energy storage cabinet.

The additional aspects and advantages of the present disclosure are partially described in the following description, and some of which will be apparent from the following description, or may be learned from practices of the present disclosure.

### BRIEF DESCRIPTION OF THE DRAWINGS

FIG. 1 is an exploded view of a battery module according to an embodiment of the present disclosure;
FIG. 2 is a schematic diagram of the internal structure of the battery module according to an embodiment of the present disclosure;
FIG. 3 is a schematic diagram of a battery module according to an embodiment of the present disclosure;
FIG. 4 is a schematic diagram of the battery module without a ventilation panel according to an embodiment of the present disclosure;
FIG. 5 is a schematic assembly diagram of the battery cells and side plates of the battery module according to the embodiment of the present disclosure;
FIG. 6 is a schematic diagram showing the relative positions of the driving fan and the heat sink of the battery module according to an embodiment of the present disclosure;
FIG. 7 is a schematic assembly diagram of the battery cells and heat sink of the battery module according to an embodiment of the present disclosure;
FIG. 8 is an enlarged view of section M in FIG. 7;
FIG. 9 is a side view of the heat sink of the battery module according to an embodiment of the present disclosure;
FIG. 10 is a front view of the heat sink of the battery module according to the embodiment of the present disclosure;
FIG. 11 is a schematic diagram of the battery cell of the battery module according to an embodiment of the present disclosure;
FIG. 12 is a schematic assembly diagram of the heat dissipation end plate and the driving fan according to the embodiment of the present disclosure;
FIG. 13 is a schematic diagram from another angle of the assembly of the heat dissipation end plate and the driving fan according to the embodiment of the present disclosure;
FIG. 14 is a schematic diagram of the second side plate and the fixing bracket according to the embodiment of the present disclosure;
FIG. 15 is a schematic assembly diagram of the second side plate and the fixing bracket according to the embodiment of the present disclosure;
FIG. 16 is a schematic diagram of the top cover according to an embodiment of the present disclosure;
FIG. 17 is a front view of the support beam according to an embodiment of the present disclosure;
FIG. 18 is a top view of the support beam according to an embodiment of the present disclosure;
FIG. 19 is a schematic assembly diagram of the battery cells and the connecting piece according to an embodiment of the present disclosure;
FIG. 20 is a schematic assembly diagram of the connecting piece and the busbar mounting bracket according to the embodiment of the present disclosure;
FIG. 21 is a partial enlarged view of the assembly of the connecting piece and the busbar mounting bracket according to the embodiment of the present disclosure;
FIG. 22 is a schematic assembly diagram of the heat dissipation end plate, the driving fan, and the information collector according to an embodiment of the present disclosure;
FIG. 23 is a schematic diagram of the assembly of the electrical connection component and connection terminal according to an embodiment of the present disclosure;
FIG. 24 is another angle schematic diagram of the assembly of the electrical connection component and the connection terminal according to the embodiment of the present disclosure;
FIG. 25 is a cross-sectional view at A-A in FIG. 2;
FIG. 26 is an exploded view of the conductive bar and the connection terminal according to an embodiment of the present disclosure;
FIG. 27 is a schematic diagram of the assembly of conductive bar and the connection terminal according to an embodiment of the present disclosure;
FIG. 28 is an exploded view of the conductive bar and the insulating cover according to an embodiment of the present disclosure;
FIG. 29 is a schematic diagram of the assembly of the conductive bar and the insulating cover according to an embodiment of the present disclosure;
FIG. 30 is an exploded view of the electrical connection component and the connection terminal on the battery module according to an embodiment of the present disclosure;
FIG. 31 is a schematic assembly diagram of the electrical connection component and the connection terminal on the battery module according to an embodiment of the present disclosure;
FIG. 32 is a schematic diagram of the ventilation panel according to an embodiment of the present disclosure;
FIG. 33 is a schematic diagram of the energy storage cabinet according to an embodiment of the present disclosure;
FIG. 34 is a cross-sectional view of the energy storage cabinet according to an embodiment of the present disclosure;
FIG. 35 is an internal structure diagram of the energy storage cabinet according to an embodiment of the present disclosure;
FIG. 36 is a schematic diagram of the energy storage cabinet without the battery module installed according to an embodiment of the present disclosure;
FIG. 37 is an exploded view of FIG. 3;
FIG. 38 is a partially enlarged view of the ventilation panel in FIG. 32;
FIG. 39 is a front view of the ventilation panel according to an embodiment of the present disclosure;
FIG. 40 is a bottom view of the ventilation panel according to an embodiment of the present disclosure;
FIG. 41 is a partially enlarged view of FIG. 40;
FIG. 42 is a bottom view of the ventilation panel according to another embodiment of the present disclosure;
FIG. 43 is an enlarged view of a partial structure of FIG. 42;
FIG. 44 is a front view of the ventilation panel according to yet another embodiment of the present disclosure;
FIG. 45 is a front view of the ventilation panel according to another embodiment of the present disclosure;
FIG. 46 is a front view of the ventilation panel according to another embodiment of the present disclosure;
FIG. 47 is an enlarged view of the ventilation panel at the second mounting portion according to the embodiment of the present disclosure;
FIG. 48 is an enlarged view of the heat dissipation end plate at the first mounting portion according to the embodiment of the present disclosure;
FIG. 49 is a schematic diagram of the energy storage cabinet according to an embodiment of the present disclosure;
FIG. 50 is a schematic diagram of the driving fan and the information collector according to an embodiment of the present disclosure;
FIG. 51 is a schematic diagram of the connection between the information collectors of two adjacent battery modules according to an embodiment of the present disclosure.
FIG. 52 is a schematic diagram of the connection of information collector between two adjacent battery modules according to another embodiment of the present disclosure;
FIG. 53 is a schematic assembly diagram of the battery module, control unit, positive power line and negative power line according to the embodiment of the present disclosure;
FIG. 54 is a schematic diagram of the energy storage cabinet fully loaded with battery modules according to an embodiment of the present disclosure.

### DETAILED DESCRIPTION

The following provides a detailed description of the embodiments of the present disclosure, along with examples of these embodiments shown in the accompanying drawings. Throughout the drawings, identical or similar reference numerals denote identical or similar components, or components having identical or similar functions. The embodiments described below with reference to the drawings are merely exemplary, are intended to explain the present disclosure and cannot be construed as a limitation on the present disclosure.

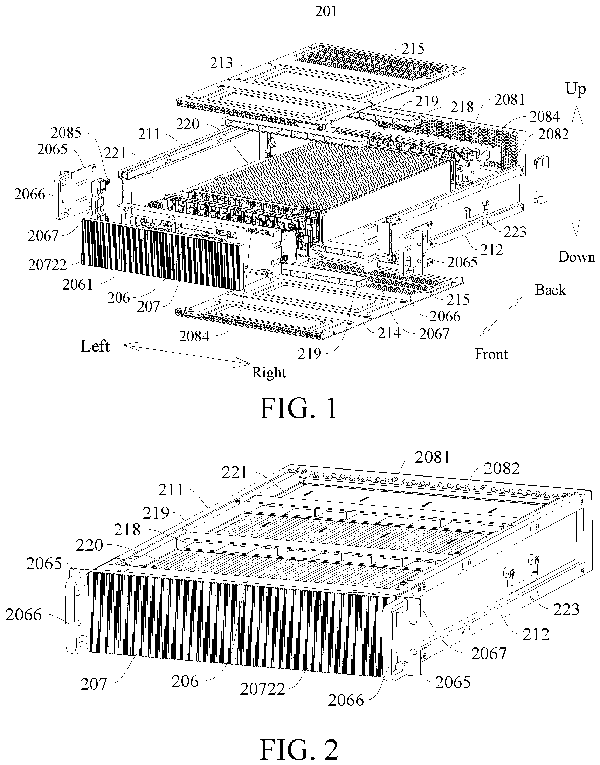

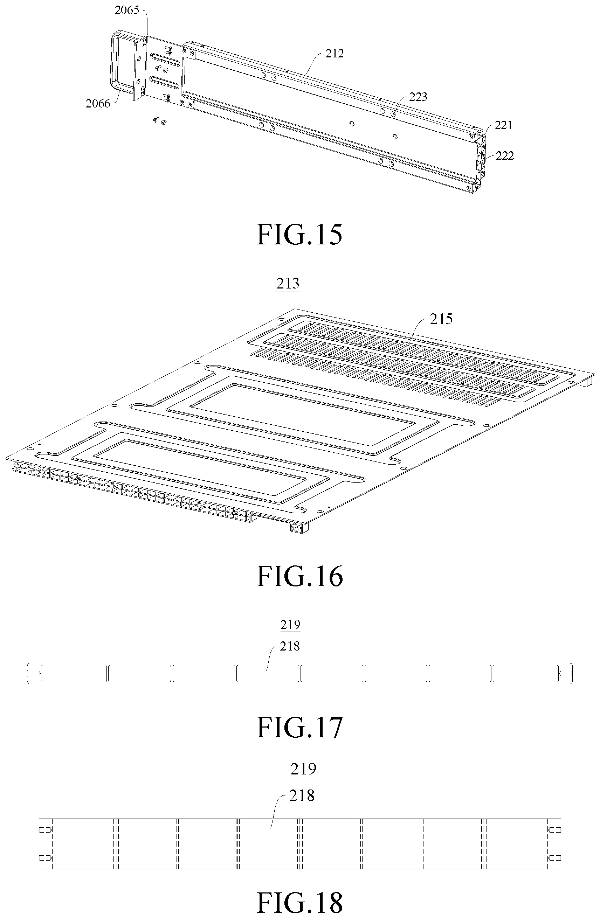

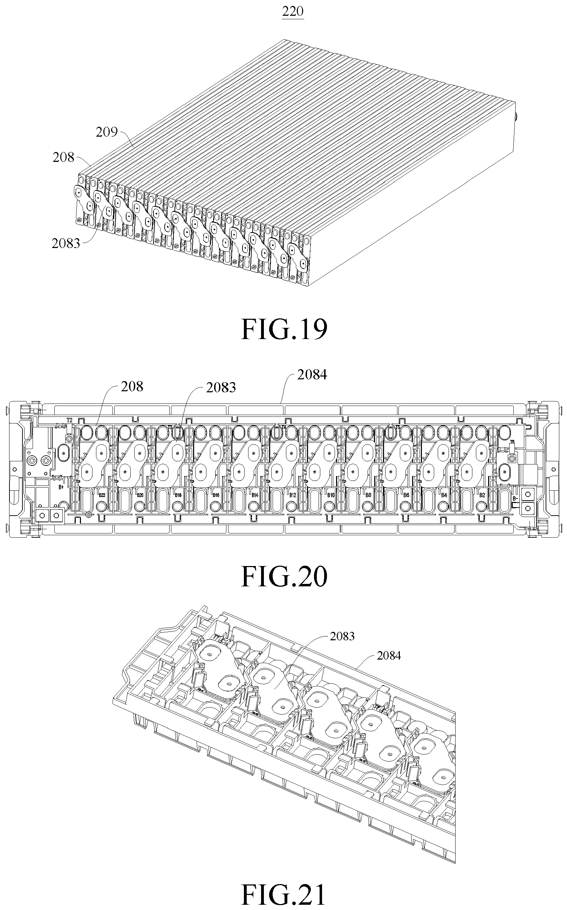

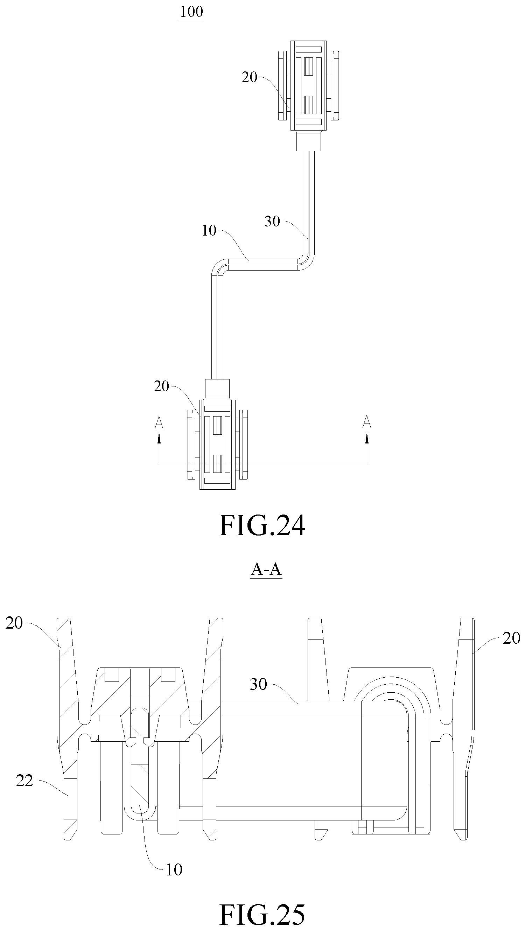

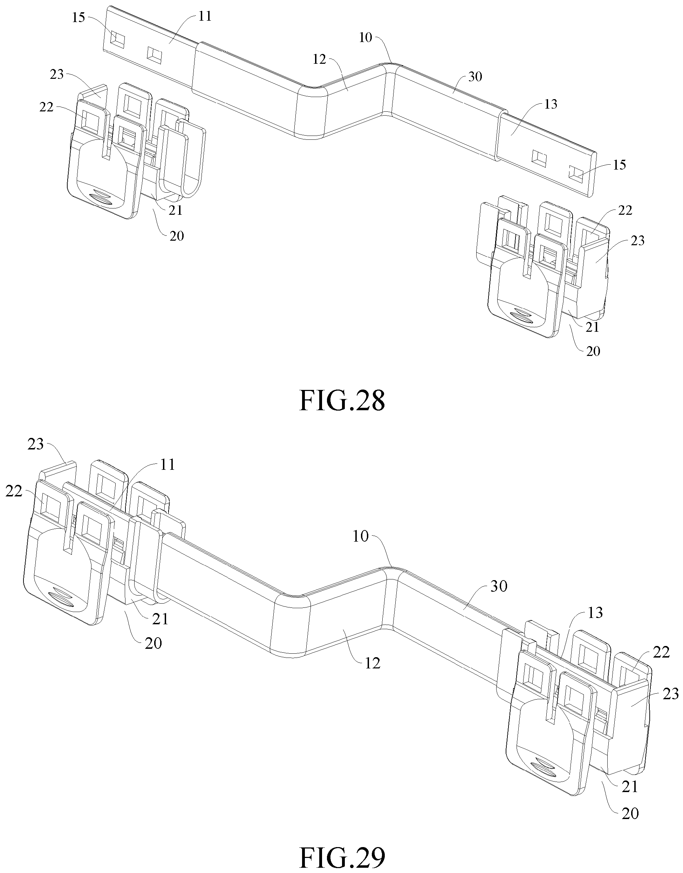

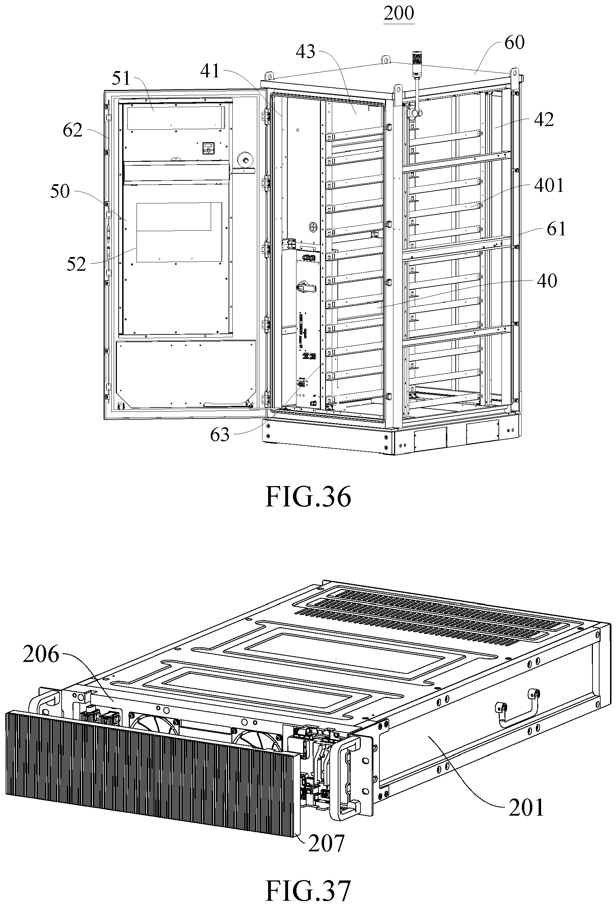

The following is a description of the energy storage cabinet 200 according to the embodiment of the present disclosure with reference to FIG. 1 to FIG. 54. The energy storage cabinet 200 can supply power to other electrical equipment. The battery module 201 can be installed inside the energy storage cabinet to supply power to other electrical equipment.

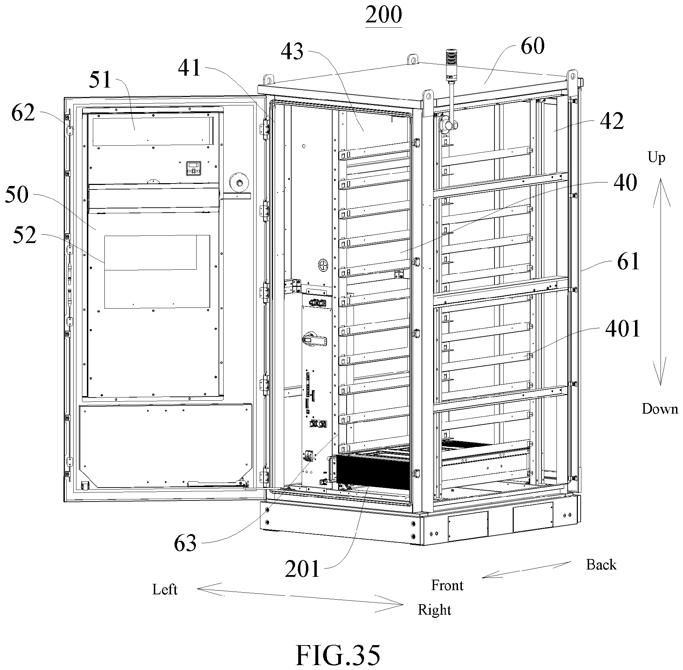

As shown in FIG. 1 to FIG. 52, the energy storage cabinet 200 according to the embodiment of the present disclosure, including: a control unit 1000, a cabinet 60 and a plurality of battery modules 201. The multiple battery modules 201 are installed inside the cabinet 60 and are stacked in a first direction of the energy storage cabinet 200, when the energy storage cabinet 200 is placed in the direction shown in FIG. 35, the first direction of the energy storage cabinet 200 refers to the vertical direction of the energy storage cabinet 200, that is, multiple battery modules 201 are stacked vertically in the energy storage cabinet 200. In the cabinet 60, a first space 40 and a second space 41 are formed, which are arranged side by side in a second direction perpendicular to the first direction. It can also be understood that the first space 40 and the second space 41 are arranged side by side in the second direction of the energy storage cabinet 200, and the first space 40 and the second space 41 can be arranged adjacent to each other, that is, the first space 40 and the second space 41 are arranged adjacently. When the energy storage cabinet 200 is placed in the direction shown in FIG. 35, the second direction of the energy storage cabinet 200 may refer to the left-right direction of the energy storage cabinet 200. The first space 40 is used for installing the battery modules 201, and the multiple battery modules 201 are installed in the first space 40. That is, the battery modules 201 are located in the first space 40, the control unit 1000 is installed in the second space 41 and the control unit 1000 is electrically connected to the battery modules 201, and can control the battery module 201 to deliver electrical energy to external devices.

By arranging the control unit 1000 and the battery module 201 separately in different spaces, that is, the control unit 1000 is arranged in the second space 41 and the battery module 201 is arranged in the first space 40, it enables a clear separation between the control unit 1000 and the battery modules 201, thereby avoiding interference between them. Additionally, this arrangement facilitates a compact assembly of the control unit 1000 and multiple battery modules 201, contributing to a reduction in the overall volume of the energy storage cabinet 200.

In some embodiments of the present disclosure, the first space 40 and the second space 40 are connected, and the second space 41 is suitable for guiding airflow into the first space 40. By having the first space 40 and the second space 41 arranged side-by-side along the second direction of the energy storage cabinet 200, the air can be guided laterally from the second space 41 into the first space 40. After the air enters the first space 40, the air flowing into the first space 40 is evenly distributed to each battery module 201, ensuring that each module receives the same or nearly the same amount of the air intake. This improves the consistency of the heat dissipation efficiency among the multiple battery modules 201, ensuring uniform heat dissipation of multiple battery modules 201 and enhancing the heat dissipation efficiency of the battery modules 201. This further guarantees the heat dissipation effect of each battery module 201, equalizes the temperatures of multiple battery modules 201, and more effectively prevents thermal runaway in the battery modules 201, thus enhancing the operational safety of the energy storage cabinet 200.

In some embodiments of the present disclosure, as shown in FIG. 35, multiple module mounting racks 401 are provided within the first space 40, multiple module mounting racks 401 are spaced apart sequentially in the first direction. Multiple battery modules 201 are individually installed on these multiple module mounting racks 401,there is a one-to-one correspondence between the multiple battery modules 201 and the multiple module mounting racks 401. One battery module 201 is installed on each module mounting rack 401, and the module mounting rack 401 reliably supports the battery module 201, ensuring that battery module 201 is securely installed within the first space 40.

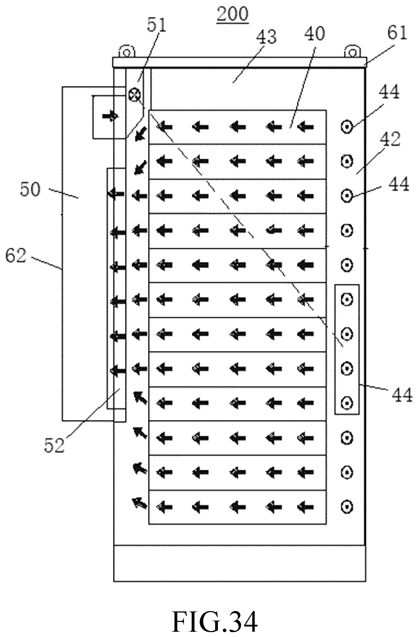

In some embodiments of the present disclosure, as shown in FIG. 34 and FIG. 35, a third space 42 is formed within the cabinet 60, the third space 42 communicates with both the first space 40 and the second space 41. Furthermore, the third space 42, the first space 40 and the second space 41 are all arranged to extend in a first direction of the energy storage cabinet 200. The air in the second space 41 is suitable for flowing into the first space 40 through the third space 42. After entering the second space 41, the air can be guided laterally from the second space 41 into the third space 42. After the air enters the third space 42, the air flowing into the third space 42 is evenly distributed to each battery module 201, ensuring that each module receives the same or nearly the same amount of the air intake, thereby achieving a balanced air intake. This further improves the consistency of heat dissipation efficiency among the multiple battery modules 201, ensuring further uniform heat dissipation of multiple battery modules 201. It also enhances the effective cooling performance of each module. Furthermore, a balanced temperature is maintained among the multiple battery modules 201, and more effectively preventing thermal runaway and enhancing the operational safety of the energy storage cabinet 200.

In some embodiments of the present disclosure, as shown in FIG. 34 and FIG. 35, in a second direction of the energy storage cabinet 200, the first space 40 and the third space 42 are located on the same side of the second space 41, and the third space 42 is adjacent to both the second space 41 and the first space 40. When the energy storage cabinet 200 is placed in the direction shown in FIG. 35, the first space 40 and the third space 42 can be arranged on the left or right side of the second space 41. The present disclosure uses the arrangement where the first space 40 and the third space 42 are arranged on the right side of the second space 41 as an example. Furthermore, in the third direction of the energy storage cabinet 200, when the energy storage cabinet 200 is placed in the direction shown in FIG. 35, the third direction of the energy storage cabinet 200 refers to the front-back direction of the cabinet, the third space 42 is positioned behind the first space 40, specifically, the left side of the third space 42 communicates with the second space 41, while the front end of the third space 42 communicates with the first space 40. After entering the second space 41, the air flows towards the rear end of the second space 41. When the air reaches the third space 42, it flows in from its left side. The air within the third space 42 then flows through its front end into the first space 40, dissipating heat from the battery module 201 and thereby achieving a cooling effect on the battery module 201.

In some embodiments of the present disclosure, the energy storage cabinet 200 is equipped with a first connecting hole 44, the first connecting hole 44, connects the first space 40 with the second space 41. The first connecting hole 44 may be one or more. After entering the second space 41, the air flows into the first space 40 through the first connecting holes 44 to exchange heat with the battery modules 201, thereby preventing thermal runaway and enhancing the operational safety of the energy storage cabinet 200.

In some embodiments of the present disclosure, there are a plurality of first connecting holes 44 arranged along the first direction, spaced apart sequentially, each battery module 201 corresponds to at least one first connecting hole 44. The air within the second space 41 flows into the first space 40 through the plurality of first connecting holes 44, enabling the air to be evenly distributed to each battery module 201. This ensures that each battery module 201 receives the same or similar amount of airflow, achieving a balanced air intake. This further improves the consistency of heat dissipation efficiency among the multiple battery modules 201, ensuring further uniform heat dissipation of multiple battery modules 201. It also further enhances the effective cooling performance of each module. Furthermore, a balanced temperature is maintained among the multiple battery modules 201, and more effectively preventing thermal runaway and enhancing the operational safety of the energy storage cabinet 200.

In some embodiments of the present disclosure, as shown in FIG. 34 and FIG. 35, a third space 42 is formed within the cabinet 60, and the third space 42 communicates with the second space 41 through the first connecting hole 44, the first connecting hole 44 is one or more, preferably multiple, the plurality of first connecting holes 44 are all connected to the third space 42 and the second space 41, meaning that the third space 42 and the second space 41 are connected through these multiple first connecting holes 44, the first connecting holes 44 are arranged along the first direction, and the third space 42 contains a second connecting hole connecting it to the first space 40, the air in the second space 41 is suitable for flowing into the first space 40 through the third space 42, and there are one or more second connecting holes. Furthermore, multiple first connecting holes 44 are arranged sequentially and spaced apart along the first direction, and in the first direction of the energy storage cabinet 200, at least one first connecting hole 44 is positioned at a height corresponding to each battery module 201, preferably, there are multiple second connecting holes, after the air enters the second space 41, the air in the second space 41 flows through multiple first connecting holes 44 into the third space 42, the air flows into the third space 42 from the side of the second space 41. After the air flows into the third space 42 through multiple first connecting holes 44, the air in the third space 42 flows into the first space 40 through the second connecting hole, enabling a more even distribution of the air flowing into the first space 40 to each battery module 201. This ensures that each battery module 201 receives the same or approximately the same amount of air intake, achieving a balanced air intake effect. It further enhances the consistency of heat dissipation efficiency among multiple battery modules 201, ensuring more uniform heat dissipation of multiple battery modules 201. This further guarantees the heat dissipation effect of each battery module 201, promotes temperature balance among the modules, and more effectively prevents thermal runaway of the battery modules 201, thus further enhancing the operational safety of the energy storage cabinet 200.

Furthermore, there is a plurality of second connecting holes arranged along the first direction, further, the plurality of second connecting holes are spaced apart sequentially, and the plurality of first connecting holes 44 and the plurality of second connecting holes are in one-to-one correspondence. After the air flows into the third space 42 simultaneously through the plurality of first connecting holes 44, the air in the third space 42 then flows into the first space 40 through the plurality of second connecting holes. It enables the air flowing into the third space 42 to be more uniformly dispersed to each battery module 201, ensuring that each battery module 201 receives the same or similar amount of airflow, thereby achieving a more balanced air intake. This further improves the consistency of heat dissipation efficiency among the multiple battery modules 201, ensuring more uniform heat dissipation of multiple battery modules 201.

Furthermore, a plurality of sub-spaces are formed within the third space 42, further, the third space 42 has several partition plates, several partition plates are sequentially spaced apart in the first direction to divide the third space 42 into a plurality of sub-spaces. There is a one-to-one correspondence between the plurality of sub-spaces, the plurality of first connecting holes 44, and the plurality of second connecting holes. Each sub-space communicates with its corresponding first connecting hole 44 and second connecting hole. After the air flows simultaneously into the third space 42 through multiple first connecting holes 44, the air entering through each first connecting hole 44 flows into its corresponding sub-space. The air in each sub-space then flows through the corresponding second connecting hole to the corresponding battery module 201. This enables the air flowing into the third space 42 to be more evenly distributed to each battery module 201, ensuring that each battery module 201 receives the same or nearly the same amount of air intake. This better achieves a balanced air intake effect, thereby further improving the consistency of heat dissipation efficiency among multiple battery modules 201, and ensuring more uniform heat dissipation of multiple battery modules 201.

In some embodiments of the present disclosure, the second connecting hole is configured as a single hole, the second connecting hole is arranged close to the middle of the third space 42 in the first direction, after the air flows into the third space 42 it then enters the first space 40 through the second connecting hole. As the air diffuses in the first direction, it enables the air flowing into the third space 42 to be more uniformly dispersed to each battery module 201, ensuring that each battery module 201 receives the same or similar amount of airflow. This better achieves a balanced air intake. This further improves the consistency of heat dissipation efficiency among the multiple battery modules 201, ensuring more uniform heat dissipation of multiple battery modules 201.

In some embodiments of the present disclosure, a third space 42 is formed within the cabinet 60, the third space 42 connects the first space 40 and the second space 41, the air flows from the second space 41 into the third space 42, the air in the third space 42 flows into the first space 40 to dissipate heat from the battery module 201, thereby facilitating rapid temperature reduction.

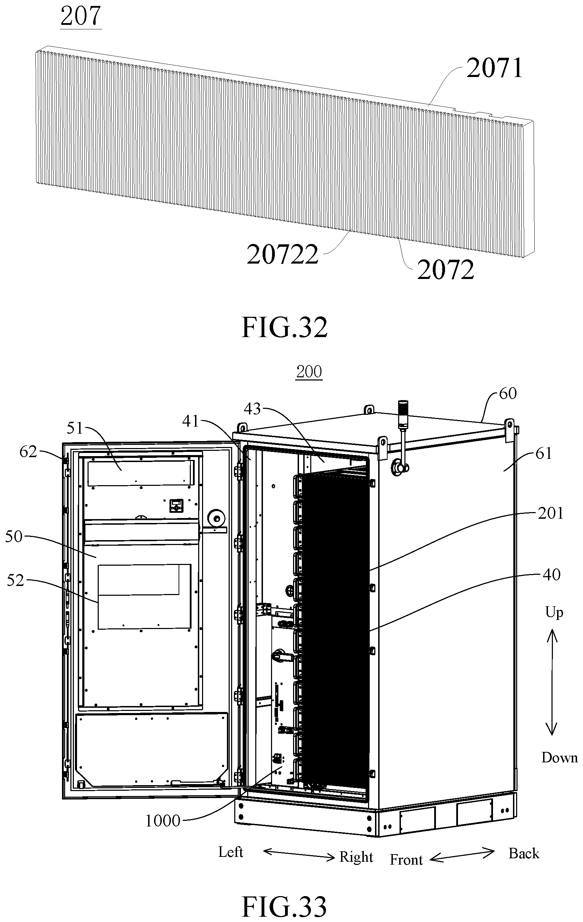

In some embodiments of the present disclosure, as shown in FIG. 33 to FIG. 35, the energy storage cabinet 200 may further include: an air conditioner 50, furthermore, the air conditioner 50 may be positioned within the cabinet 60, and the air conditioner 50 is equipped with an air outlet 51 and an air inlet 52, the air outlet 51 is connect with the second space 41 and/or the first channel 43 within the cabinet 60, the air inlet 52 is connect with the first space 40. When the air conditioner 50 is working, cold air blows from the air outlet 51 of the air conditioner 50 into the second space 41, subsequently flowing through multiple first connecting holes 44 into the third space 42. The cold air then enters the first space 40 from the third space 42 to exchange heat with the battery modules 201, effectively dissipating heat. Finally, the heated air, after exchanging heat with the battery modules 201, recirculates back into the air conditioner 50 through its air inlet 52, maintaining a continuous circular flow of air that efficiently dissipates heat from the battery modules 201, thus improving the heat dissipation efficiency of the multiple battery modules 201.

In some embodiments of the present disclosure, the air conditioner 50 is positioned outside the cabinet 60. Such an arrangement prevents the air conditioner 50 from occupying the internal space of the cabinet 60, thereby leaving sufficient assembly space for other components within the cabinet 60.

In some embodiments of the present disclosure, the dimension of the second space 41 along the first direction is larger than that of the air inlet 52 along the same direction, this configuration ensures easy alignment between the second space 41 and the air inlet 52, facilitating the flow of air from the second space 41 into the air inlet 52.

In some embodiments of the present disclosure, as shown in FIG. 33 to FIG. 35, a first channel 43 is also formed within the cabinet 60, the first channel 43 and the first space 40 are arranged along the first direction, and the first channel 43 is connected to the first space 40 and/or the third space 42, that is to say, the first channel 43 is connect to the first space 40, or the first channel 43 is connect to the third space 42, or both. This disclosure takes the example of the first channel 43 being connect to the third space 42 for explanation. Furthermore, the cabinet 60 has a base and a top plate spaced apart along the first direction, and the first channel 43 is located between the top plate and the first space 40. When the energy storage cabinet 200 is placed in the direction shown in the direction in FIG. 33, the first channel 43 is located above the first space 40 and is connected to both the air outlet 51 of the air conditioner 50 and the third space 42. Furthermore, the front end of the first channel 43 is connect to the air outlet 51 of the air conditioner 50, while the rear end of the first channel 43 is connect to the third space 42. When the air conditioner 50 is operating, cold air is blown out from the air outlet 51 of the air conditioner 50, a portion of the air enters the second space 41, while another portion enters the first channel 43, after entering the first channel 43, the air flows along the first channel 43 into the upper end of the third space 42. From there, the cold air flows downwards the lower end of the third space 42, participating in the heat dissipation cycle and providing additional supplying to the battery modules 201. This enhances the heat dissipation efficiency of the battery modules 201, enabling faster removal of the heat from the battery modules 201.

In some embodiments of the present disclosure, as shown in FIG. 33 and FIG. 35, the end of the first space 40 close to the air inlet 52 is open, forming a first opening, while the end of the second space 41 close to the air outlet 51 is also open, forming a second opening, when the energy storage cabinet 200 is placed in the direction shown in FIG. 35, the front end of the first space 40 is open, forming the first opening, and the front end of the second space 41 is open, forming the second opening. Furthermore, the cabinet 60 includes a cabinet body 61 and an opening and closing door 62. The cabinet body 61 includes a base and a top plate, defining an installation chamber that is open at one end, specifically the front end. Within this chamber, the first space 40, second space 41, third space 42, and first channel 43 are formed. The opening and closing door 62 serves to open or close the installation chamber, and the air conditioner 50 is mounted on the opening and closing door 62. Furthermore, a partition 63 is provided within the installation chamber to segregate it into the first space 40, the second space 41, the third space 42 and the first channel 43. Since the air conditioner 50 is installed on the opening and closing door 62, both the air outlet 51 and the air inlet 52 of the air conditioner 50 are located on the opening and closing door 62. With the end of the first space 40 near the air inlet 52 being open, the end of the second space 41 near the air outlet 51 being open, and the end of the first channel 43 near the air inlet 52 also being open, it facilitates the flow of cold air into the second space 41 and the first channel 43, as well as the flow of cold air from the first space 40 into the air inlet 52 of the air conditioner 50.

Furthermore, the first opening and the second opening are separated by a spacer (not shown in the FIG.), during the process of air blowing into the second space 41, the air within the first space 40 simultaneously flows towards the air inlet 52 of the air conditioner 50. By separating the open ends of the first space 40 and the second space 41 with the spacer, it prevents the inlet and outlet airflows from interfering with each other. This allows the cold air to flow smoothly into the second space 41, and also enables the air that has exchanged heat in the first space 40 to flow smoothly into the air conditioner 50. Additionally, it avoids contributing to the noise generated by the energy storage cabinet 200.

In some embodiments of the present disclosure, the partition 63 is provided with a first connecting hole 44. Since the partition 63 divides the installation chamber into the first space 40, the second space 41, the third space 42 and the first channel 43, positioning the first connecting hole 44 on the partition 63 facilitates the communication between the second space 41 and the third space 42 through the first connecting hole 44.

In some embodiments of the present disclosure, the third space 42 and the first space 40 are arranged in the third direction of the energy storage cabinet 200, which is orthogonal to both the first direction and the second direction. When the energy storage cabinet 200 is placed in the direction shown in FIG. 35, the third direction of the energy storage cabinet 200 refers to the front-back direction in FIG. 35, this arrangement allows for a more compact internal structure of the energy storage cabinet 200.

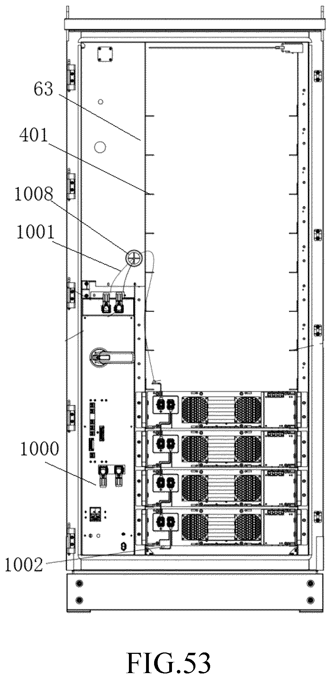

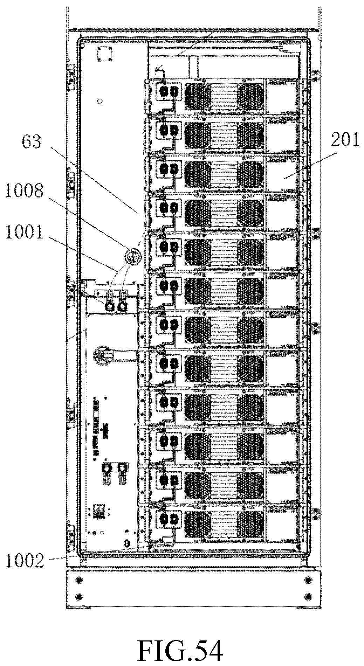

In some embodiments of the present disclosure, as shown in FIG. 53 and FIG. 54, the energy storage cabinet 600 may further include a positive power line 1001 and a negative power line 1002. One end of the positive power line 1001 is connected to the control unit 1000, while the other end of the positive power line 1001 is suitable for plugging into the connection terminal 202 of the battery module 201, similarly, one end of the negative power line 1002 is connected to the control unit 1000, the other end of the negative power line 1002 is suitable for plugging into the connection terminal 202 of the battery module 201. Specifically, multiple battery modules 201 are connected in series in sequence, one end of the positive power line 1001 is electrically connected to the control unit 1000, and the other end can be electrically connected to the positive connection terminal 2029 of the battery module 201, one end of the negative power line 1002 is electrically connected to the control unit 1000, and the other end is electrically connected to the negative connection terminal 2030 of another battery module 201 at the opposite end of the series. Such an arrangement can realize the electrical connection between the control unit 1000 and the battery module 201, achieving the purpose of the control unit 1000 controlling the battery modules 201.

Moreover, the positive power line 1001 and the negative power line 1002 are wire harnesses, and their positions in the energy storage cabinet 600 are adjustable, the connection ends of the positive power line 1001 and the negative power line 1002 to the battery module 201 can be appropriately adjusted based on the positions of the battery module 201 in the energy storage cabinet 600. For example, as shown in FIG. 53, when the energy storage cabinet 600 is fully loaded with battery modules 201, the positive power line 1001 can be routed to the battery module 201 located at one end and electrically connected to its positive connection terminal 2029, while the negative power line 1002 can be routed to the battery module 201 located at the other end and electrically connected to its negative connection terminal 2030. As shown in FIG. 54, when the energy storage cabinet 600 is not fully loaded with battery modules 201, the positive power line 1001 can be moved to the battery module 201 located at the end and electrically connected to the positive connection terminal 2029 of the battery module 201, and the negative power line 1002 can be moved to the battery module 201 located at the end and electrically connected to the negative connection terminal 2030 of the battery module 201

Due to the varying usage scenarios and total power consumption of electrical appliances, users have different requirements for the power capacity of the electricity of energy storage cabinet 200. As the energy storage cabinet 200 needs to be used with an inverter, the diverse needs of users lead to varied demands for inverters, the diversity needs of users lead to diverse requirements for inverters. Inverters, with varying brands and models, have different operating voltage ranges, thus creating the need for flexible voltage expansion. In this disclosure, when different numbers of battery modules 201 are installed in the energy storage cabinet 600, the battery modules 201 and the control unit 1000 can be electrically connected by adjusting the positions of the positive power line 1001 and the negative power line 1002, thereby enabling flexible configuration of the number of battery modules 201 within the energy storage cabinet 600 and obtaining energy storage cabinets 600 with different capacities to meet the diverse needs of users.

Furthermore, one end of the positive power line 1001 and one end of the negative power line 1002 are both located in the second space 41, the other ends of both lines are located in the first space 40. Furthermore, as shown in FIG. 53 and FIG. 54, the partition 63 is provided with wiring holes 1008 that penetrate through it, allowing the positive power line 1001 and the negative power line 1002 to pass through, so that one end of the positive power line 1001 and one end of the negative power line 1002 are both located in the second space 41, and the other end of the positive power line 1001 and the other end of the negative power line 1002 are both located in the first space 40, this arrangement enables the connection of the positive power line 1001 and negative power lines 1002 between the control unit 1000 and the battery modules 201.

It should be noted that the positive power line 1001 can be connected to the conductive bar 10, and the electrical connection between the positive power line 1001 and the battery module 201 is achieved by plugging the positive connection terminal 2029 of the battery module 201 into the conductive bar 10. The negative power line 1002 can also be connected to the conductive bar 10, and the electrical connection between the negative connection terminal 2030 and the battery module 201 is achieved by plugging the negative connection terminal 2030 of the battery module 201 into the conductive bar 10.

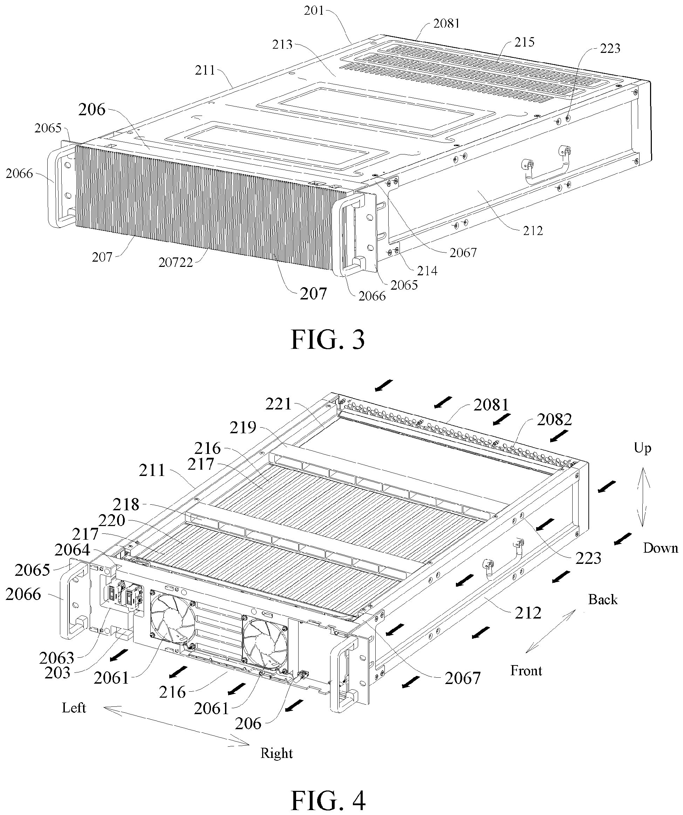

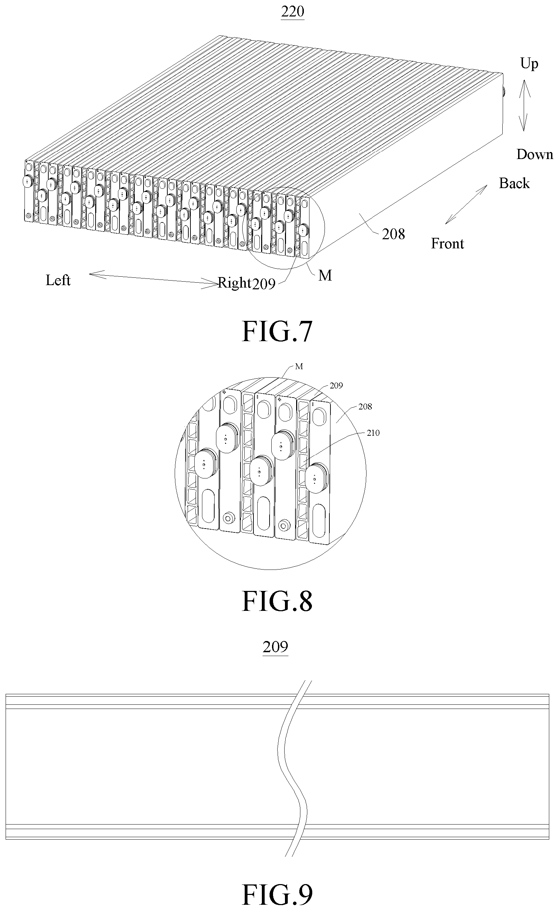

As shown in FIG. 3 to FIG. 5, the battery module 201 according to the embodiment of the present disclosure including: a battery unit 220, a support beam 219, a first side plate 211 and a second side plate 212. The battery unit 220 includes a plurality of battery cells 208, and the plurality of battery cells 208 are arranged sequentially along the thickness direction of the battery cell 208. At least between two adjacent battery cells 208, a first air duct 210 is formed, extending along a third direction that is orthogonal to both the first and second directions, this first air duct 210 communicates with a first space 40. When the battery unit 220 is placed in the direction shown in FIG. 7, the thickness direction of the battery cell 208 refers to the left-right direction shown in FIG. 7. The battery unit 220 is positioned between the first side plate 211 and the second side plate 212. As shown in FIG. 2 and FIG. 4, the support beam 219 extends along the thickness direction of the battery cell 208 and connects the first side plate 211 and the second side plate 212 to clamp the battery unit 220 securely, furthermore, the support beam 219 is positioned between the first side plates 211 and second side plates 212 to further clamp the battery unit 220, the support beam 219 is provided on at least one side of the battery unit 220 in the width direction, when the battery unit 220 is placed in the direction shown in FIG. 2, the width direction of the battery cell 208 corresponds to the vertical direction of the battery module 201 in FIG. 2, the support beam 219 can be installed on either the upper or lower side of the battery unit 220, or on both sides, preferably, support beam 219 is installed on both the upper and lower sides of the battery unit 220.

As shown in FIG. 4, when the battery module 201 is placed in the direction shown in FIG. 4, the first side plate 211 and the second side plate 212 are respectively arranged on the left and right sides of the battery unit 220, this disclosure takes the example where the first side plate 211 set on the left side of the battery unit 220 and the second side plate 212 set on the right side of the battery unit 220. The support beam 219 connects between the first side plate 211 and the second side plate 212, and since the battery unit 220 is placed between the first side plate 211 and the second side plate 212, after the support beam 219 assembles the first side plate 211 and the second side plate 212 together, they can securely clamp the battery unit 220. This allows the battery unit 220 to be fixed within the battery module 201.Inside the battery module 201, there is no need to set up a bracket to fix the battery cells 208, which increases the space available for arranging more battery cells 208 within the battery module, thereby enhancing the energy density of the battery module 201.When the battery module 201 has the same energy density, the battery module 201 of the present disclosure has a smaller volume. Furthermore, by providing support beam 219 on both the lower and upper sides of the battery unit 220, the support beam 219 on the lower side of the battery unit 220 can support the battery unit 220, so that the battery unit 220 is firmly clamped between the first side plate 211 and the second side plate 212. At the same time, by clamping the battery unit 220 with the support beam 219, the first side plate 211 and the second side plate 212, the structure of the battery module 201 can be simplified; the assembly efficiency of the battery module 201 can be improved, thus improving the production efficiency of the battery module 201.

Therefore, through the cooperation of the battery unit 220, the first side plate 211, the second side plate 212 and the support beam 219, the battery unit 220 can be clamped, the structure of the battery module 201 is simplified, and the assembly efficiency of the battery module 201 is improved. In addition, there is no need to set brackets for fixing the battery cells 208 inside the battery module 201. More battery cells 208 can be arranged in the battery module 201, which improves the energy density of the battery module 201. When the battery module 201 has the same energy density, the volume of the battery module 201 is smaller.

In some embodiments of the present disclosure, as shown in FIG. 1 and FIG.3, the battery module 201 may further include: a top cover 213 and a bottom cover 214, in the width direction of the battery cells 208, the top cover 213 and the bottom cover 214 are located on two sides of the battery unit 220, respectively, when the battery module 201 is placed in the direction shown in FIG. 1, in the vertical direction shown in FIG. 1, the top cover 213 is arranged on the upper side of the battery unit 220, and the bottom cover 214 is arranged on the lower side of the battery unit 220, a plurality of battery cells 208 are arranged between the first side plate 211 and the second side plate 212, and both the top cover 213 and the bottom cover 214 are connected to the first side plate 211 and the second side plate 212, furthermore, both the top cover 213 and the bottom cover 214 are connected between the first side plate 211 and the second side plate 212, or both the first side plate 211 and the second side plate 212 are connected between the top cover 213 and the bottom cover 214, preferably, both the top cover 213 and the bottom cover 214 are connected between the first side plate 211 and the second side plate 212. A second air duct 216 is formed between the surface of the battery unit 220 close to the top cover 213 and the top cover 213 and/or between the surface of the battery unit 220 close to the bottom cover 214 and the bottom cover 214 through the separation effect of the support beam 219, in other words, the second air duct 216 can be formed between the surface of the battery unit 220 close to the top cover 213 and the top cover 213 through the separation effect of the support beam 219, or between the surface of the battery unit 220 close to the bottom cover 214 and the bottom cover 214 through the separation effect of the support beam 219, or between the surface of the battery unit 220 close to the top cover 213 and the top cover 213 and between the surface of the battery unit 220 close to the bottom cover 214 and the bottom cover 214, preferably, the second air ducts 216 are formed between the surface of the battery unit 220 close to the top cover 213 and the top cover 213, and between the surface of the battery unit 220 close to the bottom cover 214 and the bottom cover 214. In other words, the second air ducts 216 are formed between the top cover 213 and the battery cell 208 and/or between the bottom cover 214 and the battery cell 208, preferably, the second air ducts 216 are present in both locations, and are communicate with the first space 40.

Specifically, support beam 219 is provided between the surface of the battery unit 220 close to the top cover 213 and the top cover 213, and between the surface of the battery unit 220 close to the bottom cover 214 and the bottom cover 214, the support beam 219 between the battery unit 220 and the top cover 213 separate them to form the second air duct 216 between the battery unit 220 and the top cover 213, and similarly, the support beam 219 between the battery unit 220 and the bottom cover 214 separate them to form another second air duct 216 between the battery unit 220 and the bottom cover 214. The external air of the battery unit 220 can flow into the second air duct 216, and the air can exchange heat with the battery unit 220 after flowing into the second air duct 216, and then will flow out of the battery module 201, thereby removing heat from the battery cells 208, achieving a cooling effect, and enhancing the heat dissipation efficiency of the battery cells 208. Furthermore, by arranging the second air duct 216 between the battery unit 220 and the top cover 213 and between the battery unit 220 and the bottom cover 214, the temperature difference between the two sides of the single battery cell 208 can be controlled within 4 degrees, so that the temperature difference between different areas of the battery cells 208 can be more balanced.

In some embodiments of the present disclosure, as shown in FIG. 2, FIG.4 and FIG. 5, the support beam 219 is in contact with both the surface of the battery unit 220 close to the top cover 213 and the top cover 213, and/or with both the surface of the battery unit 220 close to the bottom cover 214 and the bottom cover 214, dividing the second air duct 216 into a plurality of sub-air ducts 217, and the support beam 219 has an air passage 218 that connects two adjacent sub-air ducts 217. Further, when the battery module 201 is placed in the direction shown in FIG. 1, the support beam 219 positioned between the battery unit 220 and the top cover 213 is in contact with both the upper surface of the battery unit 220 and the top cover 213, similarly, the support beam 219 positioned between the battery unit 220 and the bottom cover 214 is in contact with both the lower surface of the battery unit 220 and the bottom cover 214, both sets of support beams 219 divide the second air duct 216 into multiple sub-air ducts 217 , which are arranged sequentially along the length of the battery cells 208.

The external air of the battery module 201 flows into the sub-air duct 217, it can flow into the adjacent sub-air duct 217 through the air passage 218. In the process of the air flowing, and the air can exchange heat with the battery unit 220, thereby removing heat from the battery cells 208, and then will flow out of the battery module 201. Moreover, by making contact the support beam 219 with the battery unit 220, the support beams 219 located below the battery unit 220 can support the battery unit 220. Meanwhile, the support beam 219 located below the battery unit 220 and the support beam 219 located above the battery unit 220 clamp the battery unit 220, thereby enabling the battery unit 220 to be securely assembled within the battery module 201.

Further, as shown in FIG. 2 and FIG. 4, a plurality of support beams 219 can be arranged between the battery unit 220 and the top cover 213, spaced apart sequentially along the length of the battery cells 208 (i.e., front-back direction in FIG. 4), at the same time, multiple support beams 219 can also be arranged between the battery unit 220 and the bottom cover 214, and the plurality of support beams 219 between the battery unit 220 and the bottom cover 214 are sequentially spaced apart in the length direction of the battery cells 208. By clamping the battery unit 220 simultaneously through the plurality of support beams 219, and by clamping the battery unit 220 through the first side plate 211 and the second side plate 212, the battery unit 220 can be more firmly assembled in the battery module 201, and the first side plate 211 and the second side plate 212 can also firmly clamp the battery unit 220.

In some embodiments of the present disclosure, as shown in FIG. 4, the support beam 219 spans across all the battery cells 208 along their thickness direction. As shown in FIG. 4, the leftmost end of the support beam 219 is connected to the first side plate 211, while the rightmost end is connected to the second side plate 212, by spanning across all battery cells 208 in their thickness direction and connecting with the first plates 211 and the second plates 212, the support beams 219 enable the first side plates 211 and the second side plates 212 to securely clamp the battery unit 220.

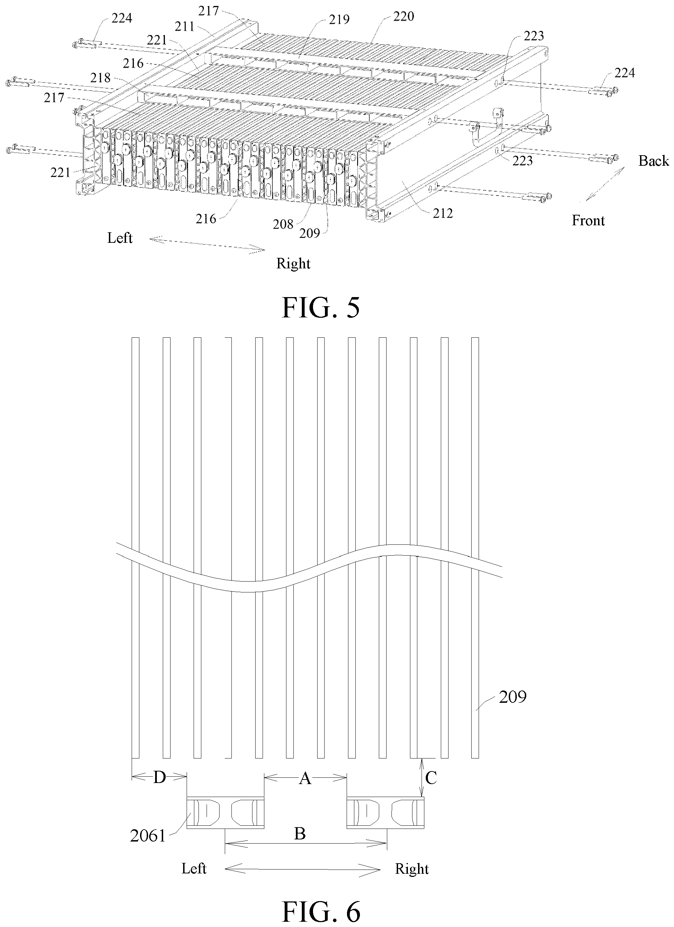

In some embodiments of the present disclosure, as shown in FIG. 5, the inner surface of the first side plate 211 and/or the second side plate 212, which are close to the battery unit 220, may be equipped with a limiting bosses 221 protruding towards the battery unit 220. It can also be understood that the limiting bosses 221 can be installed on the inner surface of either the first side plate 211, the second side plate 212, or both, close to the battery unit 220, after the assembly of the support beam 219, the first side plate 211, and the second side plate 212, the limiting bosses 221 can squeeze the battery unit 220, so that the battery unit 220 is fixed in the battery module 201.

Furthermore, the support beam 219 is overlapped on the limiting boss 221, specifically, as shown in FIG. 5, the two ends of the support beam 219 located between the battery unit 220 and the top cover 213 overlapped on the upper surfaces of the limiting bosses 221 of the first side plates 211 and the second side plates 212, respectively, the limiting bosses 221 provide support to the support beams 219 between the battery unit 220 and the top cover 213, ensuring a reliable assembly with the first side plates 211 and the second side plates 212. Similarly, the two ends of the support beam 219 located between the battery unit 220 and the bottom cover 214 overlapped on the lower surfaces of the limiting bosses 221of the first side plates 211 and the second side plates 212, respectively, the limiting bosses 221 provide support to the support beams 219 between the battery unit 220 and the bottom cover 214, thereby preventing the support beam 219 between the battery unit 220 and the bottom cover 214 from excessively squeezing the battery cells 208.

In some embodiments of the present disclosure, as shown in FIG. 5, a third air duct 222 is formed in the limiting boss 221, extending along the length direction of the battery cell 208, since the limiting boss 221 is in contact with the battery unit 220, after the air flows into the third air duct 222, it can exchange heat with the battery unit 220. When the air flows along the third air duct 222, the air can continuously take away the heat of the battery unit 220, thereby achieving the effect of cooling the battery unit 220.

In some embodiments of the present disclosure, as shown in FIG. 5, both the first side plate 211 and the second side plate 212 are equipped with mounting holes 223 designed for assembling the support beams 219, and the axis of the mounting holes 223 extends in the thickness direction of the battery cells 208, the mounting holes 223 on the first side plate 211 penetrate the plate in its thickness direction, and likewise, the mounting holes 223 on the second side plate 212 penetrate the second side plate 212 in its thickness direction. Through the first fasteners 224 passing through the mounting holes 223 and engaging with the support beam 219, the first side plate 211 and the second side plate 212 can securely clamp the battery unit 220. There are multiple first fasteners 224 and multiple mounting holes 223, with each fastener corresponding to a single hole, the first fasteners 224 can be bolts or screws. The first fasteners 224 pass through the corresponding mounting holes 223 from the outside of the first side plate 211 and the second side plate 212 and then are threaded connected to the support beam 219, thereby fixing the first side plate 211 and the second side plate 212 and enabling them to securely clamp the battery unit 220..

In some embodiments of the present disclosure, as shown in FIG. 7 and FIG. 8, the battery module 201 may further include: a heat sink 209, the heat sink 209 is placed between at least two adjacent battery cells 208 among the plurality of battery cells 208, which is in contact with the adjacent battery cells 208. The heat sink 209 defines a first air duct 210 extending along the length direction of the battery cell 208. When the battery module 201 is placed in the direction shown in FIG. 7, the length direction of the battery cells 208 refers to the front-back direction in FIG. 7. This arrangement enables the contact surface between the heat sink 209 and the battery cells 208 to be the large surface of the battery cells 208, which can improve the heat dissipation effect of the heat sink 209 on the battery cells 208. Furthermore, the air (such as cold air) can flow into the first air duct 210 from the battery module 201. When the cold air flows through the first air duct 210, it exchanges heat with the battery cell 208 and takes away their heat, thereby achieving the effect of cooling the battery cells 208. After the air in the first air duct 210 flows out of the first air duct 210, the air can flow out of the battery module 201, discharging the heat from the battery module 201.

Furthermore, the first air duct 210 is connected to the first space 40. After the cold air flows from the third space 42 into the first space 40, it can then enter the first air duct 210. As the cold air flows through the first air duct 210, it exchanges heat with the battery cells 208 and takes away their heat, thereby achieving the effect of cooling the battery cells 208. After the air in the first air duct 210 flows out of the first air duct 210, the air can flow into the air conditioner 50 through the air inlet 52.

In some embodiments of the present disclosure, as shown in FIG. 5, FIG. 7 and FIG. 8, the heat sink 209 can define a plurality of first air ducts 210, the first air ducts 210 are arranged sequentially along the width direction of the battery cells 208. When the battery module 201 is placed in the direction shown in FIG. 7, the width direction of the battery cells 208 refers to the vertical direction in FIG. 7. This arrangement enables the air to flow smoothly in different first air ducts 210, avoiding the formation of vortices in the heat sink 209, thereby ensuring a consistent airflow velocity, facilitating the outflow of air from the heat sink 209, taking away their heat from the battery cells 208, and also avoiding noise generated by the air in the heat sink 209.

In some embodiments of the present disclosure, as shown in FIG. 7 and FIG. 8, multiple battery cells 208 are grouped into multiple battery cell groups, with each group comprising at least one battery cell 208. Furthermore, as shown in FIG. 7, every two battery cells 208 constitute a battery cell group, and additionally, the two battery cells 208 positioned at the ends respectively form a battery cell group. A heat sink 209 is positioned between each pair of adjacent battery cell groups. This arrangement not only ensures that each battery cell 208 is in contact with at least one heat sink 209 for effective heat dissipation, but also be attached to the side of the battery cell 208 with a larger area, thereby increasing the heat dissipation area of the battery cell 208 and reducing the temperature difference in various areas of the battery cells 208. At the same time, this layout enhances the structural stability and safety of the battery module 201 by providing support for the battery cells 208.

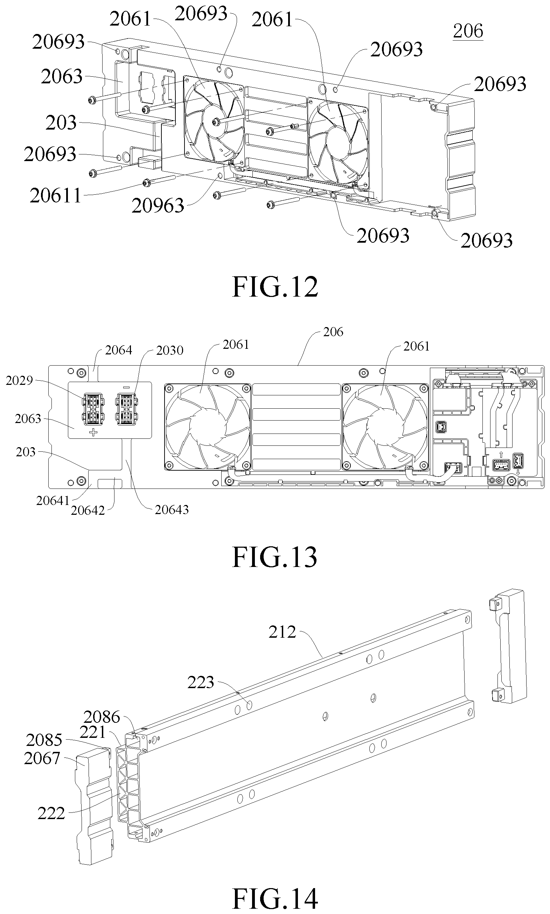

In some embodiments of the present disclosure, as shown in FIG. 4 and FIG. 12, the battery module 201 may further include: a driving fan 2061. The driving fan 2061 is provided at one end of the battery unit 220 along the length direction of the battery cell 208 and spaced apart from the battery unit 220. The driving fan 2061 is responsible for driving the air to flow through the first air duct 210. Furthermore, as shown in FIG. 4, when the battery module 201 is placed in the direction as shown in FIG. 4, the driving fan 2061 is located at the front end of the battery unit 220. Different types of fans can be selected for the driving fan 2061 based on specific heat dissipation requirements. When the driving fan 2061 is working, the blades of the driving fan 2061 rotate, and under the drive of the driving fan 2061, the air in the first air duct 210 flows along the first air duct 210 towards the driving fan 2061, and the heat generated by the battery cells 208 is taken away by the air flow, and the air brought out by the driving fan 2061 is finally discharged to the outside of the battery module 201. By providing the driving fan 2061, the air flow velocity in the first air duct 210 can be increased, and the heat of the battery cells 208 can be taken away more quickly, thereby improving the heat exchange efficiency of the heat sink 209.

Furthermore, the air conditioner 50 can be replaced by other types of blowers, which needs to be connected to the battery management system similarly to the air conditioner, and the blowers should be located inside the cabinet 60 and outside the driving fan 2061.

In some embodiments of the present disclosure, as shown in FIG. 4 and FIG. 6, the driving fan 2061 can be set as multiple, spaced apart sequentially along the thickness direction of the battery cell 208. It should be noted that the number of driving fans 2061 is positively correlated with the number of battery cells 208 in the battery module 201. That is, the more battery cells 208 are installed in the battery module 201, the more driving fans 2061 are required, and vice versa. This disclosure takes the example of setting up two driving fans 2061 in the battery module 201 for illustration. By setting up multiple driving fans 2061, the coverage area of the driving fans 2061 can be increased, which can ensure that the airflow through the first air duct 210 of each heat sink 209 in the battery module 201 is increased, thereby further improving the heat dissipation efficiency of the battery module 201.

In some embodiments of the present disclosure, as shown in FIG. 6, along the thickness direction of the battery cell 208, the spacing distance between any two adjacent driving fans 2061 is A, A satisfies the relationship: 90mm≤A≤100mm, for example: the spacing distance between two adjacent driving fans 2061 is 98mm. By setting the spacing distance A between two adjacent driving fans 2061, along the thickness direction of the battery cells 208, i.e., the left-right direction in FIG. 6, it can be ensured that the driving fan 2061 can drive the airflow within the first air duct 210 located between the two driving fans 2061, enabling a more rapid removal of heat from the battery cell 208 and thus ensuring the heat exchange efficiency of the heat sink 209.

In some embodiments of the present disclosure, as shown in FIG. 6, along the thickness direction of the battery cell 208, the spacing distance B between the middle of any two adjacent driving fans 2061 satisfies the relationship: 180mm≤B≤200mm, for example, the spacing distance between the centers of two adjacent driving fans 2061 is 190mm. Such an arrangement can further ensure that the driving fan 2061 can drive the airflow within the first air duct 210 located between the two driving fans 2061, enabling a more rapid removal of heat from the battery cell 208 and thus ensuring the heat exchange efficiency of the heat sink 209.

In some embodiments of the present disclosure, as shown in FIG. 6, along the length direction of the battery cell 208, the spacing distance C between the driving fan 2061 and the battery cell 208 satisfies the relationship: 40mm≤C≤50mm, for example: the spacing distance between the driving fan 2061 and the battery cell 208 is 45.6mm. Furthermore, along the length direction of the battery cell 208, the spacing distance between the driving fan 2061 and the heat sink 209 is also C. This arrangement can further ensure that the driving fan 2061 can drive the airflow in the first air duct 210 located between the two driving fans 2061, enabling a more rapid removal of heat from the battery cell 208 and thus ensuring the heat exchange efficiency of the heat sink 209. Consequently, the spacing dimensions between the driving fan 2061 and the battery cell 208, as well as between the driving fan 2061 and the heat sink 209, are suitable for efficient heat dissipation.

In some embodiments of the present disclosure, as shown in FIG. 6, along the thickness direction of the battery cells 208, the spacing distance D between the surface of the outermost heat sink 209 away from the driving fan 2061 and the adjacent driving fan 2061 satisfies the relationship: 60mm≤D≤70mm, for example: the spacing distance between the surface of the outermost heat sink 209 away from the driving fan 2061 and the adjacent driving fan 2061 is 65.2mm. Such an arrangement ensures that the air within each first air duct 210 is driven to flow by the driving fan 2061, enhancing the temperature uniformity across various regions of the battery module 201, thereby achieving uniform heat dissipation for the battery module 201.

It should be noted that the larger the size of the driving fan 2061, the greater the airflow velocity in the first air duct 210. In the width direction of the battery cell 208, the size of the driving fan 2061 is greater than or equal to the width direction of the battery cell 208. At this time, the dimension of the driving fan 2061 in the width direction of the battery cell 208 achieves a 100% coverage rate of the battery cell 208, while the working area of the driving fan 2061 is circular, so that the maximum air flow can be achieved in the first air duct 210 to ensure the heat dissipation effect of the battery module 201. Furthermore, in the width direction of the battery module 201, the dimension of the driving fan 2061 accounts for 40%-50% of the width dimension of the battery module 201. For example: the dimension of the driving fan 2061 accounts for 44.62% of the width dimension of the battery module 201.

In some embodiments of the present disclosure, in the thickness direction of the battery cell 208, the lateral surface (i.e., large surface) area of the battery cell 208 is S1, and the contact area between the heat sink 209 and the adjacent battery cell 208 is S2, which satisfies the relationship: 0.90≤S2/S1≤1, for example: S2/S1 is 0.97. This arrangement can ensure the contact area between the heat sink 209 and the adjacent battery cell 208, and can improve the heat exchange efficiency between the heat sink 209 and the battery cell 208.

In some embodiments of the present disclosure, as shown in FIG. 4 and FIG. 12, the battery module 201 may further include: a heat dissipation end plate 206, the driving fan 2061 is mounted on the heat dissipation end plate 206, and the heat dissipation end plate 206 is fixedly connected to the first side plate 211 and/or the second side plate 212. It can also be understood that the heat dissipation end plate 206 can be connected to the first side plate 211, or to the second side plate 212, or to both. As shown in FIG. 4, the heat dissipation end plate 206 is installed at the front ends of the first side plate 211 and the second side plate 212, and is connected to both of them. The heat dissipation end plate 206 can be mounted on the first side plate 211 and the second side plate 212 using bolts. Furthermore, the heat dissipation end plate 206 is spaced apart from the battery unit 220. By mounting the driving fan 2061 on the heat dissipation end plate 206, the air in the first air duct 210 can be directed toward the front of the battery module 201 along the first air duct 210, and the driving fan 2061 can also be reliably arranged in the battery module 201.

Furthermore, as shown in FIG. 1 and FIG. 19 to FIG. 21, the battery module 201 may further include: a connecting piece 2083 and a busbar mounting bracket 2084, in the length direction of the battery cells 208, the two ends of the battery cells 208 are respectively provided with a positive post and a negative post. The connecting piece 2083 is connected between the positive post and the negative post of two adjacent battery cells 208 to achieve electrical connection between them. The busbar mounting bracket 2084 is arranged between the heat dissipation end plate 206 and the battery unit 220; the connecting piece 2083 is installed on the busbar mounting bracket 2084. The busbar mounting bracket 2084 can be fixedly installed on the first side plate 211 and the second side plate 212 using bolts, and it can also be snapped onto the first side plate 211 and the second side plate 212. The specific assembly form is not limited specifically. The heat dissipation end plate 206 is detachably mounted on the busbar mounting bracket 2084, thereby indirectly mounting the heat dissipation end plate 206 on the first side plate 211 and the second side plate 212.

In some embodiments of the present disclosure, as shown in FIG. 1 and FIG. 4, the battery module 201 may further include: a fixing plate 2065, the fixing plate 2065 is installed on the first side plate 211 and/or the second side plate 212, in other words, the fixing plate 2065 can be installed on either the first side plate 211, the second side plate 212, or both. Furthermore, the part connecting the fixing plate 2065 to the side plate is set as a flat structure, as shown in FIG. 2 and FIG. 4, the fixing plate 2065 may be equipped with a handle 2066, particularly located at the end away from the side plates, the part connecting the fixing plate 2065 to the handle 2066 is also structured as a flat plate. When handling the battery module 201, staff can easily lift it by gripping the handle 2066, facilitating transportation. In some embodiments of the present disclosure, the heat dissipation end plate 206 can be fixedly connected to the fixing plate 2065, by using bolts to install the heat dissipation end plate 206 onto the fixing plate 2065.

Furthermore, as shown in FIG. 1, the battery module 201 may also include: a fixing bracket 2067. The fixing bracket 2067 is mounted on the first side plate 211 and/or the second side plate 212. Preferably, both the first side plate 211 and the second side plate 212 are equipped with fixing brackets 2067. The fixing bracket 2067 is positioned between the fixing plate 2065 and the heat dissipation end plate 206, specifically inside the fixing plate 2065. The fixing bracket 2067 serves to restrict the movement of the heat dissipation end plate 206. As shown in FIG. 1 and FIG. 4, both the front ends of the first side plate 211 and the second side plate 212 are equipped with fixing brackets 2067. In the front-back direction of the battery module 201, the fixing brackets 2067 are located between the heat dissipation end plate 206 and the side plates (i.e., the first side plate 211 and the second side plate 212). By positioning the fixing brackets 2067 between the heat dissipation end plate 206 and the side plates, it allows the heat dissipation end plate 206 to be spaced apart from the battery unit 220, providing an installation space for the arrangement of components such as the connecting piece 2083, that is, an installation space can be provided for the arrangement of the busbar mounting bracket 2084. Moreover, through the limiting cooperation between the fixing bracket 2067 and the heat dissipation end plate 206, the fixing bracket 2067 can restrict the movement of the heat dissipation end plate 206 in the width direction of the battery module 201, ensuring a reliable assembly between the heat dissipation end plate 206 and the busbar mounting bracket 2084. Furthermore, the fixing bracket 2067 is detachably connected to the fixing plate 2065, for example, by bolts or screws for secure fixation. Furthermore, the heat dissipation end plate 206 can also be mounted on the fixing brackets 2067 using bolts or screws.

Further, as shown in FIG. 14, the fixing bracket 2067 is provided with a plug-in post 2085, and both the first side plate 211 and the second side plate 212 are provided with plug-in holes 2086. When assembling the fixing bracket 2067 with the first side plate 211, the plug-in posts 2085 are inserted into the plug-in holes 2086 of the first side plate 211, and then bolts are used to secure the fixing bracket 2067 and the first side plate 211 together. Similarly, when assembling the fixing bracket 2067 with the second side plate 212, the plug-in posts 2085 are inserted into the plug-in holes 2086 of the second side plate 211, and bolts are then used to fasten the fixing bracket 2067 and the second side plate 212. This arrangement enables the fixing bracket 2067 to be securely installed on the first side plate 211 and the second side plate 212, facilitating easy assembly and disassembly of the fixing bracket 2067.

In some embodiments of the present disclosure, as shown in FIG. 4 and FIG. 13, the heat dissipation end plate 206 is provided with a positive connection terminal 2029 and a negative connection terminal 2030. The positive connection terminal 2029 is connected to the total positive output pole of the battery unit 220, while the negative connection terminal 2030 is connected to the total negative output pole of the battery unit 220. Furthermore, in the thickness direction of the battery cell 208, the positive connection terminal 2029 and the negative connection terminal 2030 are arranged on the same side close to the heat dissipation end plate 206. For example, as shown in FIG. 4, both the positive connection terminal 2029 and the negative connection terminal 2030 are positioned near the left side of the heat dissipation end plate 206.When the battery modules 201 are stacked inside the energy storage cabinet, arranging the positive connection terminal 2029 and the negative connection terminal 2030 on the same side of the heat dissipation end plate 206 facilitates the connection between the positive connection terminal 2029 of one battery module 201 and the negative connection terminal 2030 of another adjacent battery module 201, which can reduce the length of the conductive bar 10. The conductive bar 10 is connected between the positive connection terminal 2029 and the negative connection terminal 2030. Furthermore, the conductive bar 10 is plug-connected to both the positive connection terminal 2029 and the negative connection terminal 2030.

In some embodiments of the present disclosure, as shown in FIG. 4 and FIG. 13, the heat dissipation end plate 206 can define a mounting groove 2063, within which both the positive connection terminal 2029 and the negative connection terminal 2030 are located. Furthermore, the mounting groove 2063 recesses inward from the outer surface of the heat dissipation end plate 206. By arranging the positive connection terminal 2029 and the negative connection terminal 2030 within the mounting groove 2063, they are concealed and prevented from protruding beyond the outer surface of the heat dissipation end plate 206, thus avoiding interference with other components.

In some embodiments of the present disclosure, as shown in FIG. 4 and FIG. 13 , the heat dissipation end plate 206 further defines a fool-proof slot 203, the fool-proof slot 203 is connect with the mounting groove 2063 , and is used for wiring (for example, conductive bar 10). Furthermore, the fool-proof slot 203 includes a first slot segment 20641, a second slot segment 20642 and a third slot segment 20643. The first slot segment 20641 and the second slot segment 20642 both extend in the height direction of the battery module 201. The second slot segment 20642 extends in the width direction of the battery module 201, with one end connected to the first slot segment 20641 and the other end connected to the third slot segment 20643. The third slot segment 20643 communicates with the mounting groove 2063, and the shape of the conductive bar 10 is compatible with the shape of the fool-proof slot 203. As shown in FIG. 13, the positive connection terminal 2029 can be located on the left side of the negative connection terminal 2030. When multiple battery modules 201 are stacked sequentially, the conductive bar 10 connects adjacent battery modules 201, the lower end of the conductive bar 10 is plug-connected to the positive connection terminal 2029 of the battery module 201 located below, and the upper end of the conductive bar 10 is plug-connected to the negative connection terminal 2030 of the battery module 201 located above, thereby achieving electrical connection between two adjacent battery modules 201. Moreover, by positioning the conductive bar 10 within the fool-proof slot 203, the fool-proof slot 203 can guide the conductive bar 10 and prevent the conductive bar 10 from being installed incorrectly (for example, the upper end of the conductive bar 10 is plug-connected to the negative connection terminal 2030 of the upper battery module 201 and the lower end of the conductive bar 10 is plug-connected to the negative connection terminal 2030 of the lower battery module 201). At the same time, concealing the conductive bar 10 within the fool-proof slot 203 prevents it from interfering with other components, ensuring the reliability of assembly of the conductive bar 10 with the positive connection terminals 2029 and the negative connection terminals 2030.

Furthermore, the heat dissipation end plate 206 can also define a wiring slot 2064, the wiring slot 2064 is connected to the mounting groove 2063. The fool-proof slot 203 and the wiring slot 2064 are located on opposite sides of the mounting groove 2063. Furthermore, when the battery module 201 is placed in the direction shown in FIG. 4, the wiring slot 2064 is arranged on the upper side of the mounting groove 2063, while the fool-proof slot 203 is arranged on the lower side of the mounting groove 2063. The wiring slot 2064 is correspondingly arranged to the positive connection terminal 2029, and the fool-proof slot 203 is correspondingly arranged to the negative connection terminal 2030. When multiple battery modules 201 are stacked in sequence, the conductive bar 10 is connected between two adjacent battery modules 201. The lower end of the conductive bar 10 is plug-connected with the positive connection terminal 2029 of the battery module 201 located below and positioned in the wiring slot 2064 of the battery module 201, the upper end of the conductive bar 10 is plug-connected with the negative connection terminal 2030 of the battery module 201 located above and positioned in the fool-proof slot 203 of the battery module 201, thereby connecting the two battery module 201 in series. The wiring slot 2064 is used for avoiding the conductive bar 10. The conductive bar 10 is concealed in the wiring slot 2064 to avoid interference between the conductive bar 10 and other components. The fool-proof slot 203 and the wiring slot 2064 can both limit the position of the conductive bar 10.

In some embodiments of the present disclosure, the battery module 201 may further include: a temperature detection component, the temperature detection component, is used to collect the temperature of the battery unit 220. It should be noted that the temperature detection component can be configured as a temperature sensor. The driving fan 2061 and the temperature detection component are both suitable for connecting with the battery management system of the battery module 201. The battery management system is used to regulate the rotational speed of the driving fan 2061 by receiving the temperature information collected by the temperature detection component. In other words, the battery management system controls the operating mode of the driving fan 2061 through the temperature information detected by the temperature detection component.

In this configuration, both the driving fan 2061 and the temperature detection component can be connected to the battery management system of the battery module 201 via communication harnesses. The temperature detection component can monitor the temperature of the battery unit 220 in real-time, and transmit the detected temperature information to the battery management system. Based on the received temperature information, the battery management system controls the rotational speed of the driving fan 2061. For example, when the temperature of the battery unit 220 is relatively high (e.g., exceeding 35°C), the battery management system instructs the driving fan 2061 to increase the rotational speed, preferably operating at full speed, to efficiently cool down the battery module 201. When the temperature of the battery unit 220 is relatively low (e.g., reaching 30°C), the battery management system adjusts the driving fan 2061 to operate at a lower speed, such as half speed, which can also effectively cool the battery module 201. This setup enables variable speed regulation of the driving fan 2061 in response to different temperatures of the battery module 201, allowing the fan to be adjusted to an appropriate speed that meets the cooling requirements of the battery module 201, which is conducive to saving electricity costs, and has an important effect on improving heat dissipation efficiency and energy utilization. In addition, it maintains the stability of the temperature of the battery module 201 during operation and provides effective support for the stable output of the battery module 201.

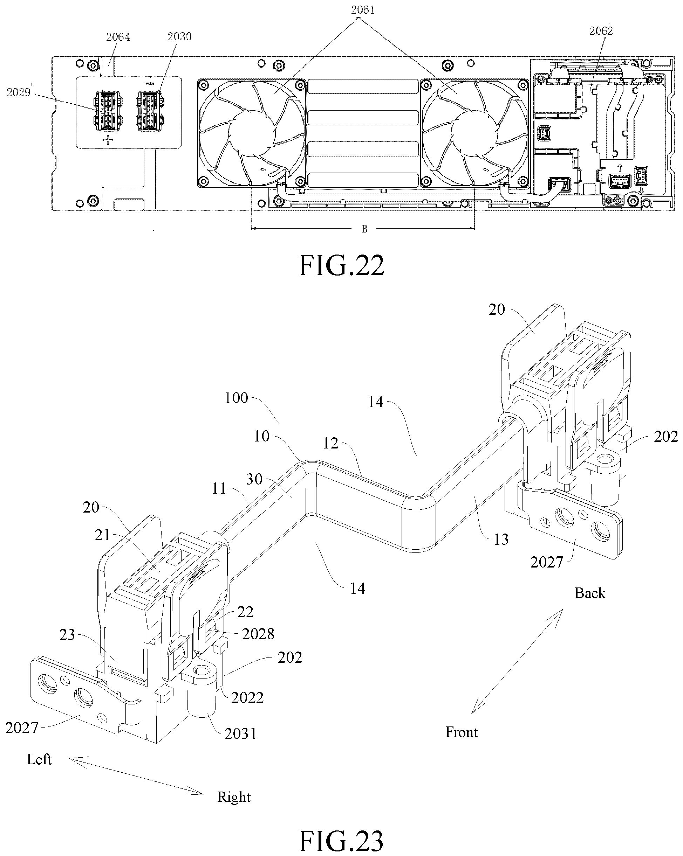

Furthermore, as shown in FIG. 22, the battery module 201 may also include an information collector 2062 (BIC). The information collector 2062 may be connected between the temperature detection component and the battery management system. The temperature information detected by the temperature detection component is transmitted through the information collector 2062 to the battery management system. Furthermore, the driving fan 2061 is electrically connected to the information collector 2062 through wiring harness, drawing power from the outside through the information collector 2062; the driving fan 2061 is driven to rotate.

In some embodiments of the present disclosure, as shown in FIG. 1, FIG. 2 and FIG. 32, the battery module 201 may also include: a ventilation panel 207, the ventilation panel 207 is disposed on the side of the driving fan 2061 away from the battery unit 220, and the ventilation panel 207 is provided with an air outlet holes 20722. As shown in FIG. 1, the ventilation panel 207 and the heat dissipation end plate 206 are both arranged on the front side of the battery unit 220. The heat dissipation end plate 206 is located between the ventilation panel 207 and the battery unit 220. The ventilation panel 207 is installed on the heat dissipation end plate 206, furthermore, the ventilation panel 207 can be installed on the heat dissipation end plate 206 through magnetic attraction or bolts. The specific assembly method of the ventilation panel 207 and the heat dissipating end plate 206 is selected depending on the specific circumstances. When the driving fan 2061 is working, the blades of the driving fan 2061 rotate, and under the drive of the driving fan 2061, the air in the first air duct 210 flows along the first air duct 210 towards the driving fan 2061, and the heat generated by the battery cells 208 is taken away by the air flow, and the air brought out by the driving fan 2061 is finally discharged to the outside of the battery module 201 through the air outlet holes 20722 located on the ventilation panel 207, effectively dissipating the hot air. Furthermore, the ventilation panel 207 also serves to shield the driving fan 2061, preventing its exposure outside the battery module 201.

In some embodiments of the present disclosure, as shown in FIG. 1 and FIG. 2, the battery module 201 may further include: an end plate 2081, the end plate 2081 is arranged at one end of the battery unit 220 and spaced apart from the battery unit 220, the end plate 2081 is connected to the top cover 213 and/or the bottom cover 214, and it has a first air inlet hole 2082 that is in communication with the first air duct 210. The end plate 2081 can be directly or indirectly connected to both the top cover 213 and the bottom cover 214, and it can be directly assembled with the top cover 213 and the bottom cover 214 through bolts. As shown in FIG. 1, a busbar mounting bracket 2084 can be arranged between the end plate 2081 and the battery unit 220, the busbar mounting bracket 2084 can be directly or indirectly installed on the first side plate 211 and the second side plate 212. The busbar mounting bracket 2084 also has a connecting piece 2083, the end plate 2081 can be installed on the top cover 213 and/or the bottom cover 214, thereby achieving an indirect connection between the end plate 2081 and the first side plate 211 and the second side plate 212. In addition, by providing the first air inlet holes 2082 on the end plate 2081 that communicate with the first air duct 210, the air can flow into the battery module 201 through the first air inlet holes 2082. A portion of the air flowing into the battery module 201 flows into the heat sink 209, while another part of the air can flow into the second air duct 216, surrounding the battery cells 208 with air, thereby further improving the heat dissipation efficiency of the battery cells 208.

Furthermore, the battery module 201 is provided with air supply holes 215, air the air supply holes 215 connects the first space 40 and the second air duct 216. In the third direction, the air supply holes 215 are located in the middle of the battery module 201, it can also be understood that the air supply holes 215 are arranged at the middle position of the battery module 201. Specifically, both the top cover 213 and the bottom cover 214 are provided with air supply holes 215 that communicate with the second air duct 216. After the cold air flows into the first space 40, the cold air in the first space 40 can flow into the second air duct 216 through the air supply holes 215, surrounding the battery cells 208 with cold air, thereby further improving the heat dissipation efficiency of the battery cells 208.

In some embodiments of the present disclosure, as shown in FIG. 1, the top cover 213 and/or the bottom cover 214 are provided with air supply holes 215 that communicate with the second air duct 216 , for example: both the top cover 213 and the bottom cover 214 are provided with air supply holes 215 that communicate with the second air duct 216, cold air can flow into the second air duct 216 through the air supply holes 215, surrounding the battery cells 208 with cold air, thereby further improving the heat dissipation efficiency of the battery cells 208.

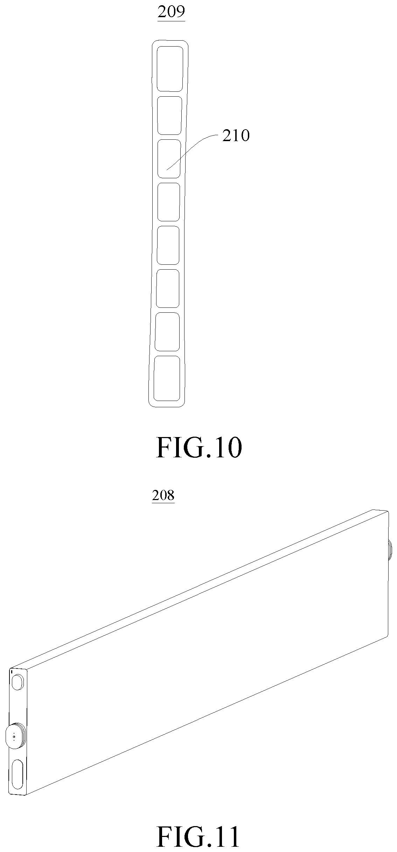

In some embodiments of the present disclosure, as shown in FIG. 11, the shape of the battery cell 208 is flat and resembles a blade, and the battery cell 208 can be a new type of lithium iron phosphate battery. The length dimension of the battery cell 208 is E, E satisfies the relationship: 400mm≤E≤1500mm, the width dimension of the battery cell 208 is F, F satisfies the relationship: 70mm≤F≤150mm, the thickness dimension of the battery cell 208 is G, G satisfies the relationship: 10mm≤G≤25mm. Such an arrangement enables the flat-shaped battery cells 208 to be arranged in the battery module 201, and by sequentially arranging multiple battery cells 208 along the thickness direction of the battery cells 208, the energy density within the battery module 201 can be increased.

The energy storage cabinet according to the embodiment of the present disclosure, including the battery module 201 of the above embodiment, the battery module 201 has a simple structure, which improves the assembly efficiency of the battery module 201, thereby improving the assembly efficiency of the energy storage cabinet, moreover, there is no need to set brackets for fixing the battery cells 208 inside the battery module 201, more battery cells 208 can be arranged within the battery module 201, which further enhances the energy density of both the battery module 201 and the energy storage cabinet. When the battery module 201 has the same energy density, the battery module 201 of the present disclosure has a smaller volume.

In some embodiments of the present disclosure, as shown in FIG. 23 to FIG. 31, the energy storage cabinet 200 can include an electrical connection assembly 100, the electrical connection assembly 100 is used to electrically connect two battery modules 201, the electrical connection assembly 100 is plug-connected with the battery modules 201, two battery modules 201 are connected through the electrical connection assembly 100, which is suitable for connecting between the two battery modules 201 to achieve electrical connection between them, thus connecting the two battery modules 201 in series or in parallel. The present disclosure takes the example of connecting the electrical connection assembly 100 between two battery modules 201 in series for illustration. The battery module 201 has a connection terminal 202, and each battery module 201 can be provided with two connection terminals 202, one of the two connection terminals 202 is configured as a positive connection terminal 2029 of the battery module 201, and the other of the two connection terminals 202 is configured as a negative connection terminal 2030 of the battery module 201.

As shown in FIG. 23 to FIG. 31, the electrical connection assembly 100 includes a conductive bar 10 and an insulating cover 20, the conductive bar 10 can be set as a copper bar, the conductive bar 10 is suitable for plug-connected with adjacent two battery modules 201 to enable electrically connect between the two battery modules 201, the insulating cover 20 can be covered on the conductive bar 10 and is suitable for connection with the battery modules 201, the conductive bar 10 is suitable for plugging-connected with the connection terminals 202 to enable electrically connect between the conductive bar 10 and the connection terminals 202.The insulating cover 20 can be covered the conductive bar 10, preventing the conductive bar 10 from popping out of the connection terminals 202, and the insulating cover 20 is connected to the connection terminals 202 and is suitable for pressing against the conductive bar 10.

When two battery modules 201 need to be connected in series, the conductive bar 10 is plugged and connected to the positive connection terminal 2029 of one of the two battery modules 201, and the conductive bar 10 is also plugged and connected to the negative connection terminal 2030 of the other of the two battery module 201, thus connecting the two battery modules 201 in series, during the plugging process of the conductive bar 10 and the connection terminal 202, there is no need to use tools such as wrenches to plug the conductive bar 10 into the connection terminal 202, making it convenient for the conductive bar 10 to dock with the connection terminals 202, which can improve the assembly efficiency of the conductive bar 10 and connection terminals 202 and also reduce the installation cost. At the same time, the insulating cover 20 is connected to the connection terminals 202 and presses against the conductive bar 10, by pressing against the conductive bar 10 through the insulating cover 20, the conductive bar 10 can be reliably plugged into the connection terminal 202, preventing virtual connection and preventing arcing, improve the operational safety of the electrical connection assembly 100, and also improve the operational safety of the battery module 201. In addition, the insulating cover 20 is an insulating component, and the insulating cover 20 can be covered the conductive bar 10, which can prevent the conductive bar 10 from being exposed, avoid electric leakage, and improve high-voltage safety.

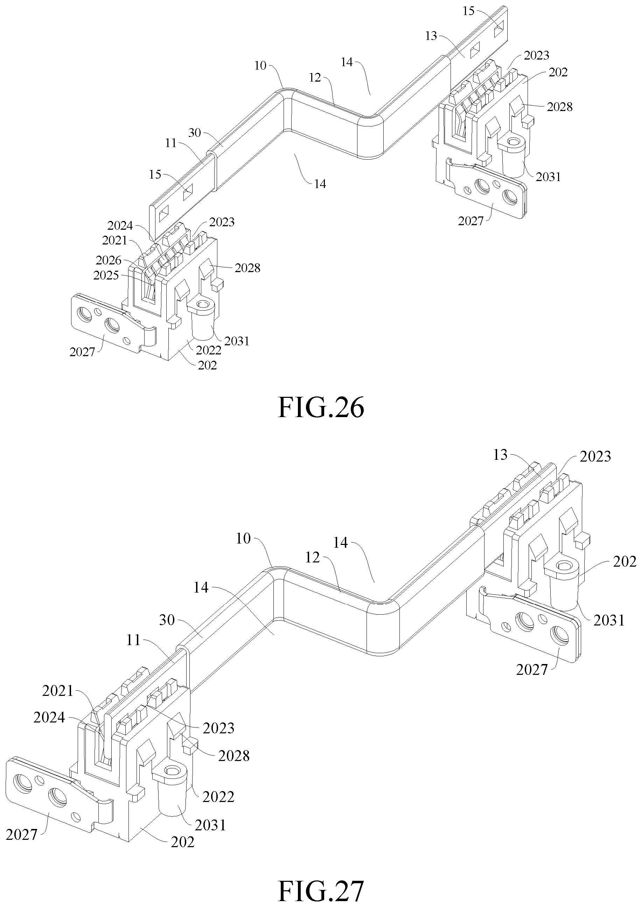

In some embodiments of the present disclosure, as shown in FIG. 26 to FIG. 29 and FIG. 31, the conductive bar 10 may include: a first sub-conductive bar 11, a second sub-conductive bar 12 and a third sub-conductive bar 13, the first sub-conductive bar 11 and the third sub-conductive bar 13 are respectively used for plugging and mating with the corresponding connection terminal 202, the second sub-conductive bar 12 is connected between the first sub-conductive bar 11 and the third sub-conductive bar 13 to separate them, thereby forming an avoidance space 14 between the first sub-conductive bar 11 and the second sub-conductive bar 12, as well as between the third sub-conductive bar 13 and the second sub-conductive bar 12, each avoidance space 14 is configured to accommodate a connection terminal 202.

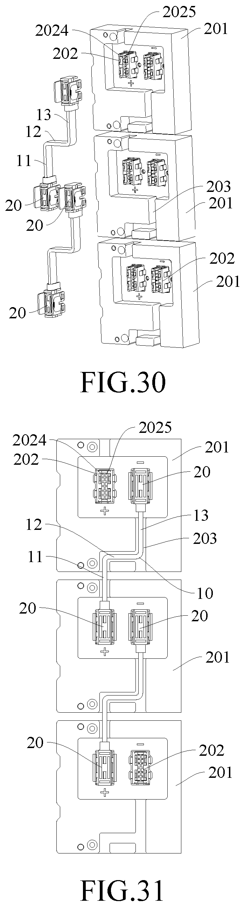

As shown in FIG. 30 and FIG. 31, a fool-proof slot 203 can be set on the battery module 201, the shape of the fool-proof slot 203 is consistent with that of the conductive bar 10, when two battery modules 201 need to be connected in series, the first sub-conductive bar 11 is plug-connected with the positive connection terminal 2029 of one of the two battery modules 201, the negative connection terminal 2030 of the battery module 201 connected to the first sub-conductive bar 11 is located within the avoidance space 14 between the first sub-conductive bar 11 and the second sub-conductive bar 12, the third sub-conductive bar 13 is plug-connected with the negative connection terminal 2030 of the other battery module 201, and the positive connection terminal 2029 of the battery module 201 connected to the third sub-conductive bar 13 is located within the avoidance space 14 between the third sub-conductive bar 13 and the second sub-conductive bar 12, and the conductive bar 10 is located in the fool-proof slot 203, the fool-proof slot 203 limits the conductive bar 10 along the length, width and thickness directions of the conductive bar 10, this arrangement can conceal the conductive bar 10 in the fool-proof slot 203, prevent the conductive bar 10 from being scratched, and facilitate its positioning. Furthermore, by designing the fool-proof slot 203 as a curved structure to cooperate and assemble with the conductive bar 10, it prevents the conductive bar 10 from being installed incorrectly, and performs a fool-proof function.

In some embodiments of this disclosure, one end of the second sub-conductive bar 12 is connected to the first sub-conductive bar 11, and the other end of the second sub-conductive bar 12 is connected to the third sub-conductive bar 13, with the first sub-conductive bar 11 and the third sub-conductive bar 13 extending in directions away from each other. As shown in FIG. 26 to FIG. 29 and FIG. 31, one end of the second sub-conductive bar 12 is connected to one end of the first sub-conductive bar 11, and the other end of the second sub-conductive bar 12 is connected to one end of the third sub-conductive bar 13, furthermore, the second sub-conductive bar 12 is vertically arranged with the first sub-conductive bar 11 and the third sub-conductive bar 13, such an arrangement can achieve the technical effect of forming an avoidance space 14 between the first sub-conductive bar 11 and the second sub-conductive bar 12, as well as between the third sub-conductive bar 13 and the second sub-conductive bar 12, allowing for a rational layout of the first sub-conductive bar 11, second sub-conductive bar 12, and third sub-conductive bar 13. Moreover, the conductive bar 10 can be configured as a "Z"-shaped structure, by setting the conductive bar 10 as a "Z" shape and leading out the positive connection terminal 2029 and the negative connection terminal 2030 out from the same side of the battery module 201, it facilitates the installation and removal of the electrical connection assembly 100, it also facilitates the maintenance of the electrical connection assembly 100.

In some embodiments of this disclosure, as shown in FIG. 26 to FIG. 28, the conductive bar 10 is equipped with a positioning groove 15, the positioning groove 15 are suitable for positioning and mating with the connection terminals 202, furthermore, the positioning groove 15 penetrates the conductive bar 10 in the thickness direction of the conductive bar 10. The first sub-conductive bars 11 and the third sub-conductive bars 13 are equipped with positioning grooves 15, and the connection terminal 202 can be provided with a limiting protrusion 2026, after the conductive bar 10 is plugged into the connection terminal 202, the limiting protrusion 2026 extends into the positioning groove 15 of the conductive bar 10, and through the cooperation of the limiting protrusion 2026 and the positioning groove 15, the conductive bar 10 can be reliably plugged into the connection terminal 202, and the separation of the connection terminal 202 and the conductive bar 10 can be avoided, thereby further avoiding virtual connection between them and also preventing the conductive bar 10 from shaking relative to the connection terminal 202.

Furthermore, both the first sub-conductive bars 11 and the third sub-conductive bars 13 can be equipped with multiple positioning grooves 15, and the connection terminals 202 can be provided with a plurality of limiting protrusions 2026, through the cooperation of multiple positioning grooves 15 and multiple limiting protrusions 2026, the conductive bar 10 can be even more reliably plugged into the connection terminal 202, further preventing separation between the connection terminal 202 and the conductive bar 10, thereby further avoiding virtual connection between them and also further preventing the conductive bar 10 from shaking relative to the connection terminal 202.

In some embodiments of this disclosure, as shown in FIG. 23, FIG. 28, and FIG. 29, the insulating cover 20 may include: an insulating cover body 21 and a first clamping portion 22, the insulating cover body 21 can be covered the conductive bar 10 and is adapted to press against the conductive bar 10, in the first direction of the insulating cover 20, when the electrical connection assembly 100 is placed in the direction shown in FIG. 23, the first direction of the insulating cover 20 refers to the left-right direction in the FIG., and the first clamping portion 22 is provided on at least one side of the insulating cover body 21, preferably, in the first direction of the insulating cover 20, both sides of the insulating cover body 21 are provided with the first clamping portion 22, which is suitable for clamping with the connection terminal 202. By providing the first clamping portion 22 on the insulating cover body 21, so that the insulating cover 20 can be firmly installed on the connection terminal 202, and the insulating cover body 21 can be reliably pressed against the conductive bar 10, thereby further preventing the virtually connection between the conductive bar 10 and the connection terminal 202 , and being covered by the insulating cover body 21 on the conductive bar 10 , it can play an insulating protective role to prevent electric leakage of the electrical connection assembly 100 and improve the operational safety of the electrical connection assembly 100 . At the same time, by snapping the insulating cover 20 and the connection terminal 202 together, the insulating cover 20 and the connection terminal 202 can be easily disassembled and assembled, and the assembly efficiency of the insulating cover 20 and the connection terminal 202 can be improved.

In some embodiments of this disclosure, in the second direction of the insulating cover 20, when the electrical connection assembly 100 is placed in the direction shown in FIG. 23, the second direction of the insulating cover 20 refers to the front-back direction shown in FIG. 23, the end of the insulating cover body 21 away from the conductive bar 10 is provided with a shielding portion 23, the shielding portion 23 is used to shield the conductive bar 10. As shown in FIG. 23, FIG. 27, and FIG. 29, the connection terminal 202 defines a plug-in slot 2023, as shown in FIG. 23 and FIG. 27, when the electrical connection assembly 100 is placed in the direction shown in FIG. 27, the upper end of the plug-in slot 2023 is open, and in the second direction of the insulating cover 20, the front end and the rear end of the plug-in slot 2023 are both open. The conductive bar 10 can be pressed into the plug-in slot 2023 of the connection terminal 202 from the open end of the plug-in slot 2023 to achieve plug-in mating between the conductive bar 10 and the connection terminal 202. After the conductive bar 10 is plugged into the plug-in slot 2023, the insulating cover 20 is installed on the connection terminal 202, the shielding portion 23 can shield the open end of the plug-in slot 2023 in the second direction of the insulating cover 20, thereby shielding the conductive bar 10 and preventing the electric leakage of the electrical connection assembly 100. Moreover, the insulating cover 20 can cover the upper end of the plug-in slot 2023, restricting the movement of the conductive bar 10 and preventing it from popping out of the plug-in slot 2023.

In some embodiments of this disclosure, as shown in FIG. 23, FIG. 26 to FIG. 28, the conductive bar 10 is externally fitted with an insulating sheath 30, the insulating sheath 30 serves an insulating function, furthermore, the insulating sheath 30 can be made of insulating glue, furthermore, in the length direction of the conductive bar 10, at least part of the structure of the first sub-conductive bar 11 and the third sub-conductive bar 13 is exposed outside the insulating sheath 30. By providing the insulating sheath 30 outside the conductive bar 10, the electric leakage of the conductive bar 10 can be avoided, and electric shock can be prevented after the user touches the conductive bar 10, thereby further improving the operational safety of the electrical connection assembly 100.

The battery module 201 is provided with a connection terminal 202, there are multiple battery modules 201 in the energy storage cabinet, multiple battery modules 201 are stacked in sequence in the height direction of the energy storage cabinet, each battery module 201 is provided with two connection terminals 202, which are arranged in the width direction of the battery module 201 and located at the same end, one of the two connection terminals 202 is constructed as a positive connection terminal 2029 of the battery module 201, and the other is constructed as a negative connection terminal 2030 of the battery module 201. The electrical connection assembly 100 is used to electrically connect two battery modules 201.

When it is necessary to connect two battery modules 201 in series, the conductive bar 10 is plugged and connected to the positive connection terminal 2029 of one of the two battery modules 201 and also plugged and connected to the negative connection terminal 2030 of the other of the two battery modules 201 to achieve a series connection, during the process of plugging the conductive bar 10 into the connection terminals 202, there is no need to use tools such as wrenches to plug the conductive bar 10 into the connection terminals 202, facilitating the connection between the conductive bar 10 and the connection terminals 202 and improving the assembly efficiency of the conductive bar 10 and the connection terminals 202, thereby improving the assembly efficiency of the energy storage cabinet and also reducing the installation cost of the conductive bar 10 and the connection terminal 202. At the same time, the insulating cover 20 is connected to the connection terminal 202, and the insulating cover 20 presses against the conductive bar 10, by pressing the insulating cover 20 against the conductive bar 10, the conductive bar 10 can be reliably connected to the connection terminal 202, avoiding virtual connection between the conductive bar 10 and the connection terminal 202, and preventing arcing, improving the operational safety of the electrical connection assembly 100 and also enhancing the operational safety of the battery modules 201, thereby improving the operational safety of the energy storage cabinet. In addition, the insulating cover 20 is an insulating component, and the insulating cover 20 can be covered the conductive bar 10, which can prevent the conductive bar 10 from being exposed, avoid electric leakage, and improve high-voltage safety.

In some embodiments of this disclosure, as shown in FIG. 31, the battery module 201 is provided with two connection terminals 202, one of two connection terminals 202 is connected to the conductive bar 10, the other connection terminal 202 is away from the conductive bar 10. Each battery module 201 is equipped with two connection terminals 202, one of which is connected to the conductive bar 10, the other is located within the avoidance space 14 formed by the conductive bar 10, so as to keep the connection terminal 202 away from the conductive bar 10 and avoid interference between them. Both connection terminals 202 are set at the same end of the battery module 201 and are arranged close to the same side of the battery module 201, in an embodiment, it can also be understood that the battery module 201 is provided with a positive connection terminal 2029 and a negative connection terminal 2030, both of which are arranged close to the same side of the battery module 201.

As shown in FIG. 31, when the electrical connection assembly 100 and the connection terminal 202 are placed in the direction shown in FIG. 31, the positive connection terminal 2029 and the negative connection terminal 2030 are arranged close to the same side of the battery module 201, for example: the positive connection terminal 2029 and the negative connection terminal 2030 are arranged close to the left side of the battery module 201.

In some embodiments of this disclosure, as shown in FIG. 26 and FIG. 27, the connection terminal 202 may include: a conductive elastic piece 2021 and an insulating terminal body 2022, the terminal body 2022 defines a plug-in slot 2023, and the conductive elastic piece 2021 is provided in the plug-in slot 2023, after the conductive bar 10 is plugged into the plug-in slot 2023, the conductive bar 10 comes into contact with the conductive elastic piece 2021. Furthermore, when the electrical connection assembly 100 is placed in the direction shown in FIG. 27, the upper end of the plug-in slot 2023 is open, and in the second direction of the insulating cover 20, the front end and the rear end of the plug-in slot 2023 are both open, the conductive bar 10 is pressed into the plug-in slot 2023 of the connection terminal 202 from the open end of the plug-in slot 2023, causing the conductive elastic piece 2021 to make contact with the conductive bar 10, thereby achieving electrical connection between the conductive bar 10 and the conductive elastic piece 2021.

Furthermore, as shown in FIG. 26 and FIG. 27, the conductive elastic piece 2021 may include a first conductive elastic piece 2024 and a second conductive elastic piece 2025, the first conductive elastic piece 2024 and the second conductive elastic piece 2025 are arranged oppositely in the first direction of the connection terminal 202, the first direction of the connection terminal 202 is consistent with the first direction of the insulating cover 20, the conductive bar 10 is suitable for being plugged between the first conductive elastic piece 2024 and the second conductive elastic piece 2025. Furthermore, there are a plurality of first conductive elastic pieces 2024 and a plurality of second conductive elastic pieces 2025, the plurality of first conductive elastic pieces 2024 and the plurality of second conductive elastic pieces 2025 are arranged in sequence along the second direction of the connection terminal 202, and a plurality of the first conductive elastic pieces 2024 corresponds one to one with the plurality of the second conductive elastic pieces 2025, and the second direction of the connection terminal 202 is consistent with the second direction of the insulating cover 20. After the conductive bar 10 is pressed into the plug-in slot 2023 of the connection terminal 202 from the open end of the plug-in slot 2023, it is sandwiched between the first conductive elastic piece 2024 and the second conductive elastic piece 2025, ensuring reliable contact between the conductive bar 10 and both the first conductive elastic piece 2024 and the second conductive elastic piece 2025, thus further avoiding virtual connection between the conductive bar 10 and the connection terminal 202.

Furthermore, as shown in FIG. 26 and FIG. 27, the conductive bar 10 is provided with a positioning groove 15, and at least one of the first conductive elastic piece 2024 and the second conductive elastic piece 2025 has a limiting protrusion 2026, the limiting protrusion 2026 is adapted to extending into the positioning groove 15 of the conductive bar 10, the positioning groove 15 may penetrate the conductive bar 10 in its thickness direction, the first sub-conductive bar 11 and the third sub-conductive bar 13 are provided with positioning grooves 15, and both the first conductive elastic piece 2024 and the second conductive elastic piece 2025 may have limiting protrusions 2026, after the conductive bar 10 is plugged into the connection terminal 202, the limiting protrusion 2026 extends into the positioning groove 15 of the conductive bar 10, through the cooperation of the limiting protrusion 2026 and the positioning groove 15, the conductive bar 10 can be reliably plugged into the connection terminal 202, preventing separation between the conductive elastic piece 2021 and the conductive bar 10, thus further avoiding a virtual connection between them, and also preventing the conductive bar 10 from shaking relative to the connection terminal 202. Furthermore, by extending the limiting protrusion 2026 into the positioning groove 15 of the conductive bar 10, it can be determined whether the conductive bar 10 is plugged in place.

In some embodiments of the present disclosure, as shown in FIG. 23 and FIG. 26, the connection terminal 202 may further include: a conductive component 2027, the conductive component 2027 can be configured as a metal piece, the conductive component 2027 is connected to the conductive elastic piece 2021 and conductive component 2027 is adapted to electrically connect to the battery module 201. Furthermore, one end of the conductive component 2027 extends into the plug-in slot 2023 and is connected to the conductive elastic piece 2021. When the connection terminal 202 is installed on the battery module 201, the conductive component 2027 is connected between the conductive elastic piece 2021 and the battery module 201, achieving electrical connection between the connection terminal 202 and the battery module 201.

In some embodiments of the present disclosure, as shown in FIG. 23 and FIG. 26, the insulating cover 20 is provided with a first clamping portion 22, and the connection terminal 202 is provided with a second clamping portion 2028, the second clamping portion 2028 is adapted to latching with the first clamping portion 22 of the insulating cover 20. In the first direction of the connection terminal 202, the second clamping portion 2028 is provided on both sides of the connection terminal 202, and the second clamping portion 2028 is connected to the first clamping portion 22 one by one. By latching the second clamping portion 2028 with the first clamping portion 22, it is convenient to install the insulating cover 20 on the connection terminal 202 and also convenient to remove the insulating cover 20 from the connection terminal 202, thus improving the efficiency of installing and removing the insulating cover 20 and the connection terminal 202. However, the present disclosure is not limited to this, the insulating cover 20 and the connection terminal 202 can also be assembled by bolts, the specific assembly method of the insulating cover 20 and the connection terminal 202 can be selected according to the actual conditions.

Furthermore, as shown in FIG. 23 and FIG. 26, the first clamping portion 22 is one of the clamping hole and the clamping hook, and the second clamping portion 2028 is the other of the clamping hole and the clamping hook. For example, the first clamping portion 22 is the clamping hole, and the second clamping portion 2028 is the clamping hook. During the assembly process of the insulating cover 20 and the connection terminal 202, the insulating cover 20 is pressed to make the clamping hook snap into the clamping hole, and the assembly of the insulating cover 20 and the connection terminal 202 can be completed. Such an arrangement can simplify the structure of the first clamping portion 22 and the second clamping portion 2028, reduce the difficulty of producing the insulating cover 20 and the connection terminal 202, and improve the production efficiency of the insulating cover 20 and the connection terminal 202.

In some embodiments of the present disclosure, in the second direction of the connection terminal 202, both ends of the plug-in slot 2023 are open, and the insulating cover body 21 is provided with a shielding portion 23, the shielding portion 23 is used to shield the open end of the plug-in slot 2023 away from the conductive bar 10. When the connection terminal 202 is placed in the direction shown in FIG. 27, the upper end of the plug-in slot 2023 is open, and in the second direction of the connection terminal 202, both ends of the plug-in slot 2023 are open, the conductive bar 10 is pressed into the plug-in slot 2023 of the connection terminal 202 from the open end of the plug-in slot 2023, causing the conductive elastic piece 2021 to come into contact with the conductive bar 10, after the conductive bar 10 is plugged into the plug-in slot 2023, the insulating cover 20 is installed on the connection terminal 202, and the shielding portion 23 can shield the open end of the plug-in slot 2023, thereby shielding the conductive bar 10, thereby preventing the electrical leakage of the electrical connection assembly 100.

Furthermore, as shown in FIG. 23, the connection terminal 202 is equipped with mounting posts 2031, and bolts are passed through these mounting posts to connect with the battery module 201, thereby securely fixing the connection terminal 202 to the battery module 201.

It should be noted that, firstly, multiple battery modules 201 are installed in the energy storage cabinet, and the multiple battery modules 201 are sequentially stacked in layers in the height direction of the energy storage cabinet, and then the conductive bar 10 is installed in the fool-proof slot 203. Then the conductive bar 10 is installed in the fool-proof slot 203, ensuring that the lower end of the conductive bar 10 aligns with the connection terminal 202 of the lower battery module 201, and the upper end of the conductive bar 10 aligns with the connection terminal 202 of the upper battery module 201, and press firmly on the conductive bar 10 to place the conductive bar 10 between the first conductive elastic piece 2024 and the second conductive elastic piece 2025 until the conductive bar 10 can no longer be pressed into the plug-in slot 2023.

In some embodiments of the present disclosure, the module assembly including: a battery module and a ventilation panel 207, and the battery module includes a battery unit 220 and a heat dissipation end plate 206, wherein,,
the battery unit 220 is used for storing and releasing electrical energy. The battery unit 220 generates heat during charging and discharging. A heat dissipation end plate 206 is installed on one side of the battery unit 220. In other words, the heat dissipation end plate 206 serves as an end plate located on one external face of the battery unit 220. The heat dissipation end plate 206 provides support and protection for the battery unit 220. At the same time, the heat dissipation end plate 206 is equipped with a driving fan 2061, which can enhance the airflow velocity passing through the battery unit 220, thereby improving the heat dissipation effect of the battery unit 220 and maintaining its operation at an appropriate temperature. Preferably, the heat dissipation end plate 206 is set on one side of the battery unit 220 in the length direction to increase the heat exchange area and heat exchange time between the airflow and the battery unit 220, thereby enhancing the heat dissipation effect of the battery unit 220.
the ventilation panel 207 is set on the outside of the heat dissipation end plate 206. That is to say, the ventilation panel 207 is set on the side of the heat dissipation end plate 206 away from the battery unit 220. The ventilation panel 207 can cover the heat dissipation end plate 206. The ventilation panel 207 includes the panel frame 2071 and the ventilation grille 2072 fixed to the panel frame 2071. The panel frame 2071 is suitable for being fixed to the heat dissipation end plate 206. The ventilation grille 2072 is used for ventilation and protecting the heat dissipation end plate 206. The ventilation grille 2072 is hollowed out to facilitate airflow passing through it, ensuring the heat dissipation effect of the battery module 201. At the same time, the ventilation grille 2072 can also prevent foreign objects from entering the driving fan 2061 and the battery unit 220, ensuring the safety and reliability of the battery module 201, foreign objects may be debris, insects, fingers, etc. In addition, the ventilation grille 2072 can also visually shield the heat dissipation end plate 206 to reduce the exposure of the driving fan 2061 and other electrical components on the heat dissipation end plate 206 to improve the neatness and aesthetics of the module assembly. Additionally, the ventilation grille 2072 can also be equipped with a company logo to increase the product recognition of the module assembly.

It should be noted that, compared to the service life of the battery unit 220, the driving fan 2061 is a wear part. When the driving fan 2061 needs maintenance or replacement due to failure, removing the ventilation panel 207 will expose the driving fan 2061 located on the heat dissipation end plate 206. The disassembly and assembly direction of the driving fan 2061 on the heat dissipation end plate 206 is on the side of the heat dissipation end plate 206 away from the battery unit 220. In other words, the disassembly and assembly direction of the driving fan 2061 is on the side of the heat dissipation end plate 206 facing the ventilation panel 207. This allows maintenance or replacement of the driving fan 2061 without having to remove the heat dissipation end plate 206, thereby improving the convenience of module assembly maintenance. As shown in FIG. 12, the driving fan 2061 is installed on the side of the heat dissipation end plate 206 away from the battery unit 220 through a plurality of second fasteners 20611, and the second fastener 20611 may be bolts.

According to the module assembly of the embodiment of the present disclosure, a heat dissipation end plate 206 is provided on one side of the battery unit 220. The heat dissipation end plate 206 is provided with a driving fan 2061. A ventilation panel 207 is provided on the outside of the heat dissipation end plate 206. The ventilation panel 207 ensures the heat dissipation effect of the module assembly and prevents foreign objects from entering. Moreover, the ventilation panel 207 can also improve the convenience of module assembly maintenance, thereby enhancing its market competitiveness.

In some embodiments of the present disclosure, the perforation ratio α of the ventilation grille 2072 satisfies the following formula: α ≥ ( µ V/v) / S1, where µ is the experimental coefficient, and µ satisfies the relationship 0.9 ≤ µ ≤ 1.1, V is the exhaust air volume per unit time when the driving fan 2061 runs at full power, v is the maximum wind speed of the driving fan 2061, and S1 is the effective air outlet area of the driving fan 2061, thereby ensuring the ventilation effect of the heat dissipation end plate 206 and making the heat dissipation end 206 meet the heat dissipation requirements of the battery module 201.

In a specific embodiment of the present disclosure, µ can be 1.0, and the exhaust air volume when the driving fan 2061 runs at full power is 149.50CFM, 1CFM=0.000472m³/s, that is, V is 0.070564m³/s , the maximum wind speed v of the driving fan 2061 is 17m/s, and the effective air outlet area of the driving fan 2061 is L1*L2 (as shown in FIG. 7), L1=L2=92mm, that is, S1 is 0.008464m², thus, ( µV/v)/S1=49%, that is to say, when the perforation ratio α of the ventilation grille 2072 is greater than or equal to 49%, it can satisfy the heat dissipation requirements of the battery module 201. At the same time, in order to ensure the shielding and protective effect of the ventilation grille 2072 on the heat dissipation end plate 206, as well as its aesthetics, the perforation ratio α of the ventilation grille 2072 is preferably 50%.

Furthermore, the perforation ratio α of the ventilation grille 2072 also satisfies the following formula: α ≤70%. It can be understood that when α is greater than 70%, the strength of the ventilation grille 2072 is relatively weak, making it prone to damage, and its ability to prevent foreign objects from entering the driving fan 2061 and the battery unit 220 is poor.

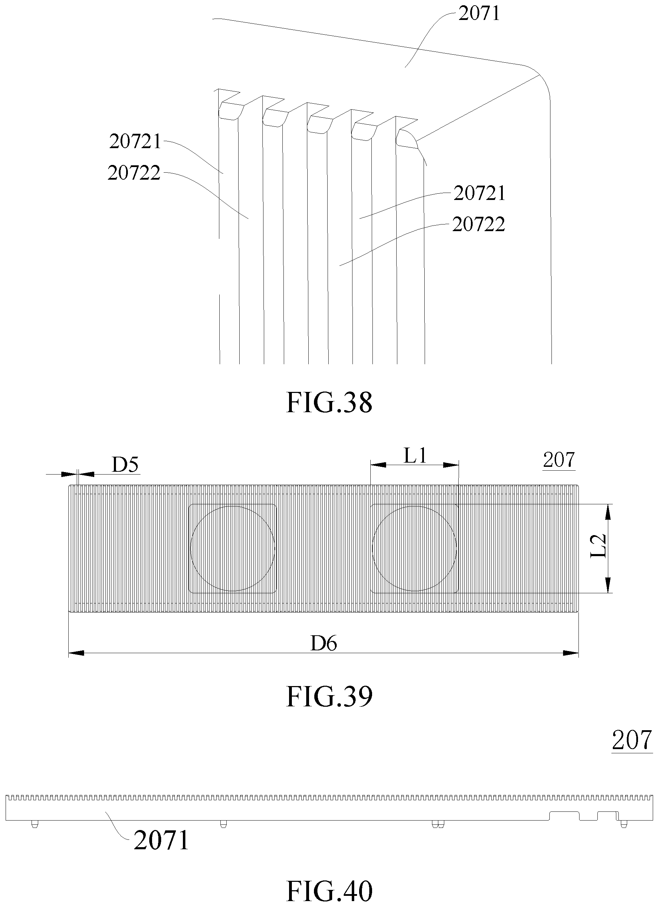

In some embodiments of the present disclosure, as shown in FIG. 38 to FIG. 39, the ventilation grille 2072 includes a plurality of air guide grilles 20721 arranged at intervals. Both ends of each air guide grille 20721 are fixed to the panel frame 2071, and air outlet holes 20722 are formed between adjacent air guide grilles 20721.The air outlet holes 20722 have equal widths, that is to say, the width of the air outlet hole 20722 in the air outlet direction is equal and the width of the air outlet hole 20722 is D1. The air guide grilles 20721 have equal widths, that is to say, the width of the air guide grille 20721 in the air outlet direction is equal, and the width D2 of the air guide grille 20721 satisfies the following formula: 0.6≤D1/D2≤1.4. Equal-width air outlet holes and equal-width air guide grilles facilitate the production and manufacturing of the ventilation grille 2072. At the same time, when the air outlet holes 20722 and air guide grilles 20721 are of equal width, D1/D2 is approximately equivalent to the perforation ratio α of the ventilation grille 2072. If D1/D2 is less than 0.6, the width of the air outlet holes 20722 will be too small, and the ventilation grille 2072 will result in poor heat dissipation of the battery module 201. On the other hand, if D1/D2 is greater than 1.4, the width of the air outlet holes 20722 will be too large, making it difficult for the ventilation grille 2072 to prevent foreign objects from entering the driving fan 2061 and the battery unit 220.

In a specific embodiment of the present disclosure, the ventilation panel 207 is manufactured using an integrated injection molding process, D1/D2=1, D1 is 2mm, D2 is 2 mm, which facilitates the demolding of the ventilation panel 207 and improves the yield rate of the ventilation panel 207.

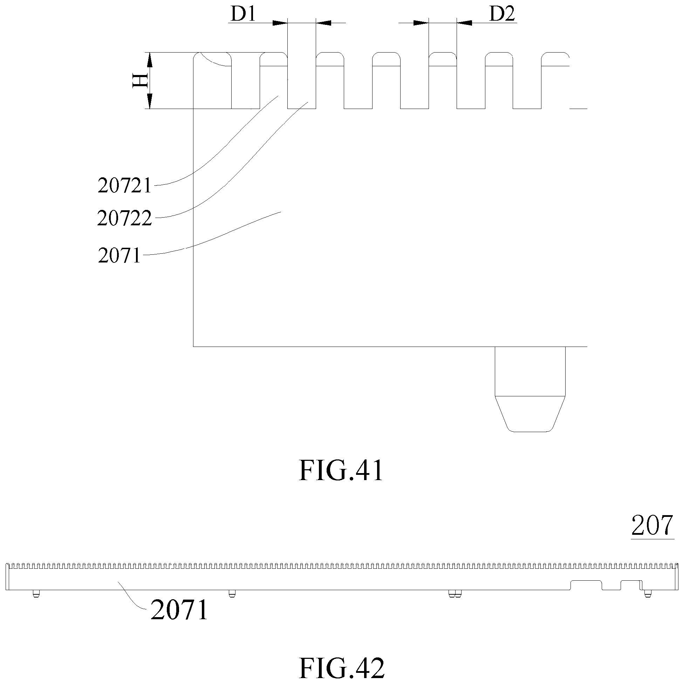

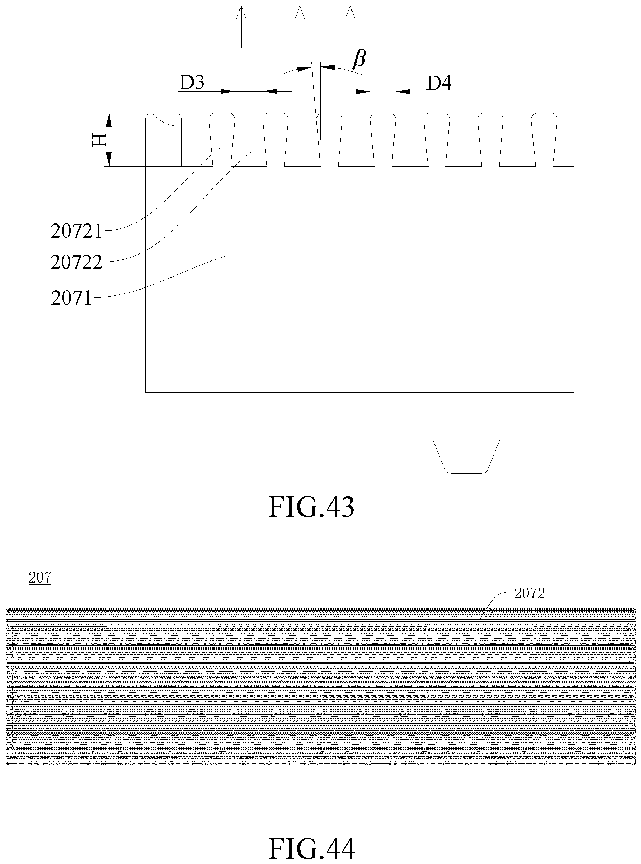

In other embodiments of the present disclosure, as shown in FIG. 42 and FIG. 43, the ventilation grille 2072 includes a plurality of air guide grilles 20721 arranged at intervals. Both ends of each air guide grille 20721 are fixed to the panel frame 2071, and air outlet holes 20722 are formed between adjacent air guide grilles 20721. The width of the air outlet hole 20722 in the air outlet direction gradually decreases, and the minimum width of the air outlet hole 20722 is D3. The width of the air guide grille 20721 in the air outlet direction gradually increases, and the maximum width D4 of the air guide grille 20721 satisfies the following formula: 0.6≤D3/D4≤1.4. This ensures the ventilation effect of the ventilation grille 2072 and prevents small foreign objects from entering the battery module 201 through the air outlet holes 20722.

It can be understood that the air outlet holes 20722 are of variable width, and the air guide grilles 20721 are also of variable width. When the driving fan 2061 blows air towards the ventilation grille 2072, the innermost width of the air outlet holes 20722 is greater than their outermost width, while the innermost width of the air guide grille 20721 is smaller than its outermost width, D3/D4 is approximately equal to the perforation ratio α of the ventilation grill 2072. If D3/D4 < 0.6, the minimum width of the air outlet holes 20722 will be too small, leading to poor heat dissipation of the battery module 201 due to the ventilation grille 2072, if D3/D4 > 1.4, the minimum width of the air outlet holes 20722 will be too large, making it difficult for the ventilation grill 2072 to prevent foreign objects from entering the driving fan 2061 and the battery unit 220.

When the driving fan 2061 blows air towards the battery unit 220, if the innermost width of the air outlet holes 20722 is smaller than its outermost width, and the innermost width of the air guide grille 20721 is greater than its outermost width, if D3/D4 < 0.6, the maximum width of the air outlet hole 20722 will be too small, leading to poor heat dissipation of the battery module 201, if D3/D4>1.4, the maximum width of the air outlet hole 20722 will be too large, making it difficult for the ventilation grille 2072 to prevent foreign objects from entering the driving fan 2061 and the battery unit 220.

In some embodiments of the present disclosure, as shown in FIG. 43, the innermost width of the air outlet hole 20722 is greater than its outermost width, and the innermost width of the air guide grille 20721 is smaller than its outermost width. It can be understood that the innermost width of the air outlet hole 20722 refers to the width of the side of the air outlet hole 20722 close to the panel frame 2071, the outermost width of the air outlet hole 20722 refers to the width of the side of the air outlet hole 20722 away from the panel frame 2071, and the innermost width of the air guide grille 20721 refers to the width of the side of the air guide grille 20721 close to the panel frame 2071, and the outermost width of the air guide grille 20721 refers to the width of the side of the air guide grille 20721 away from the panel frame 2071. That is to say, the width of the side of the air outlet hole 20722 close to the driving fan 2061 is greater than the width of the side away from the driving fan 2061, the width of the side of the air guide grille 20721 close to the driving fan 2061 is smaller than the width of the side away from the driving fan 2061.The air outlet hole 20722 may form a reverse bell mouth structure in the direction of the airflow, reducing the air resistance of the air outlet hole 20722 and the air guide grille 20721 to the air output of the driving fan 2061, thereby helping to improve the heat dissipation effect of the module assembly.

In some embodiments of the present disclosure, as shown in FIG. 43, the angle β between the air guide side wall of the air guide grille 20721 and the airflow direction satisfies the following formula: 5°≤β≤15°, for example, β can be 5 °, or 10°, or 15°, to reduce the air resistance of the air outlet hole 20722 and the air guide grille 20721 to the air output of the driving fan 2061. If β is less than 5°, the reduction in air resistance will be insignificant, if β is greater than 15°, it may affect the strength of the air guide grille 20721, making it prone to deformation and vibration under the force of the airflow.

In some embodiments of this disclosure, the material used for the ventilation panel 207 is PPO (Polyphenylene Oxide), which has good toughness, heat resistance, flame retardancy, wear resistance, oxidation resistance, and weather resistance, and other advantages. The life cycle of PPO is at least equivalent to that of the battery unit 220 (10-15 years), and can remain unchanged when exposed to hot air for a long time.

In some embodiments of the present disclosure, multiple air guide grilles 20721 are arranged at equal intervals along the fourth direction, so that the air guide grilles 20721 and air outlet holes 20722 are evenly distributed on the ventilation grille 2072. The projection length D5 of the air guide grilles 20721 in the fourth direction and the projection length D6 of the panel frame 2071 in the fourth direction satisfy the following formula: 0.002 ≤ D5/D6 ≤ 0.006. This ensures that the ventilation grille 2072 has a sufficient number of air guide grilles 20721, resulting in a relatively dense arrangement of both air guide grilles 20721 and air outlet holes 20722, which improves the air permeability uniformity of the ventilation grille 2072 and prevents small foreign objects from entering the interior of the module assembly through the air outlet holes 20722.

The fourth direction may coincide with the first direction and the second direction. For example, as shown in FIG. 7, the fourth direction may be the length direction of the panel frame 2071, and the projected length D6 of the panel frame 2071 in the fourth direction corresponds to the length of the panel frame 2071. The length of the panel frame 2071 can be equal to or similar to the length of the heat dissipation end plate 206. The projected length D5 of the air guide grille 20721 in the fourth direction represents the maximum width of the air guide grille 20721. When D6 is 531.4 mm, in order to ensure uniform air permeability of the ventilation grilles 2072 and prevent the passage of foreign objects, the projected length D5 of each air guide grille 20721 in the fourth direction may be 2 mm.

In some embodiments of the present disclosure, as shown in FIG. 9 and FIG. 43, the height H of the air guide grille 20721 extending outwards from the panel frame 2071 satisfies the following ratio relationship, 1≤H/D5≤4. This ensures that the air guide grille 20721 has sufficient strength, and at the same time, when the airflow flows through the air outlet hole 20722 between the two air guide grilles 20721, the air guide grilles 20721 form a certain guiding effect on the airflow, preventing the airflow from diverging and causing turbulence, thereby helping to improve the heat dissipation effect of the driving fan 2061. It can be understood that the height H of the air guide grille 20721 extending outwards from the panel frame 2071 is the projected length of the air guide grille 20721 along the straight line of the airflow direction. For example, when D5 is 2 mm, the optional size of H could be 4 mm.

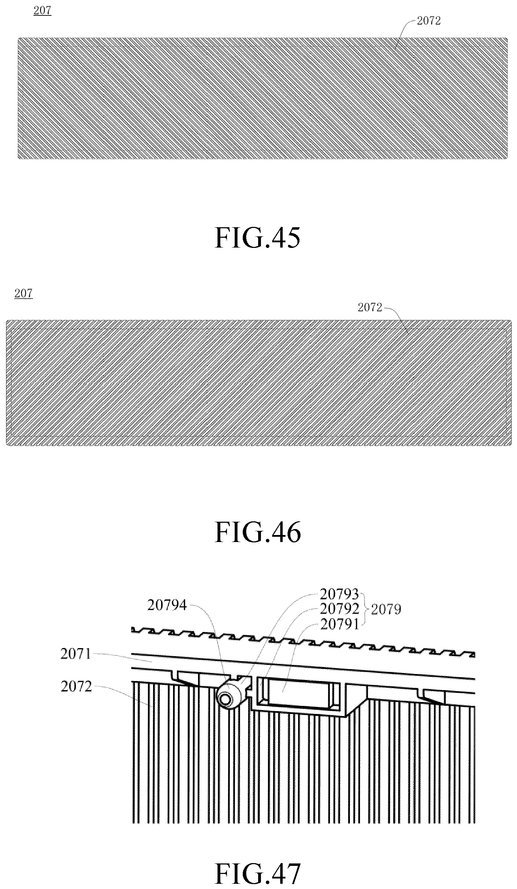

In some embodiments of the present disclosure, the air guide grille 20721 is a straight air guide grille, and the angle δ between the length direction of the straight air guide grille and the length direction of the panel frame 2071 satisfies the following range: 0°≤δ≤180°. A straight air guide grille is convenient for manufacturing and enables the ventilation panel 207 to form a harmonious and aesthetically pleasing overall visual effect. In some specific embodiments, when δ=90°, the ventilation panel 207 is as shown in FIG. 7. When δ=0°, the ventilation panel 207 is as shown in FIG. 44, when δ=45°, the ventilation panel 207 is as shown in FIG. 45, and when δ=135°, the ventilation panel 207 is as shown in FIG. 46.

In other embodiments of the present disclosure, the air guide grille 20721 can also be a curved air guide grille that extends along a bent or curved path.

In some embodiments of the present disclosure, the battery unit 220 includes a plurality of battery cells arranged sequentially with spacing along the thickness direction of the battery cells, forming heat dissipation air passages extending along the length direction of the battery cells. These air passages have a large heat exchange area with the battery cells, and the heat dissipation end plate 206 is positioned at one end of the battery cells along their length direction, enhancing the heat dissipation effect of the battery unit 220.

In some embodiments of the present disclosure, as shown in FIG. 4 and FIG. 12, the heat dissipation end plate 206 is provided with a plurality of driving fans 2061, which are arranged at equal intervals along the length direction of the heat dissipation end plate 206. This ensures uniform heat dissipation of the battery unit 220, avoids local overheating of the battery unit 220 and prevents the risk of thermal runaway of the battery unit 220.

In some embodiments of the present disclosure, as shown in FIG. 12, FIG. 47 and FIG. 48, the heat dissipation end plate 206 is provided with a first mounting portion 2069, and the ventilation panel 207 is provided with a second mounting portion 2079 corresponding to the first mounting portion 2069. One of the first mounting portion 2069 and the second mounting portion 2079 is equipped with a magnetic component 20691, and the other is equipped with a magnetic attachment piece 20791. The ventilation panel 207 and the heat dissipation end plate 206 are attached through the magnetic attraction between the magnetic component 20691 and the magnetic attachment piece 20791, the ventilation panel 207 can be easily installed on the heat dissipation end plate 206 without the use of installation tools, or the ventilation panel 207 can be detached from the heat dissipation end plate 206, thereby improving the installation and removal efficiency of the ventilation panel 207. At the same time, when the magnetic component 20691 and the magnetic attachment piece 20791 are attracted, the assembly gap between the ventilation panel 207 and the heat dissipation end plate 206 is small and uniform, and the ventilation panel 207 is not prone to shaking. The magnetic force does not affect the positioning operation of the ventilation panel 207 relative to other components, thereby improving the operational performance of the ventilation panel 207 and preventing improper installation.

In addition, during the installation and removal process of the ventilation panel 207, the damage to the first mounting portion 2069 and the second mounting portion 2079 is relatively small, and the ventilation panel 207 can be repeatedly disassembled and assembled multiple times without affecting the connection between the ventilation panel 207 and the heat dissipation end plate 206. Compared with traditional connection structures such as screw connections and buckles, the ventilation panel 207 and the heat dissipation end plate 206 of the embodiment of the present disclosure have better reliability after repeated disassembly and assembly.

It should be noted that the magnetic component 20691 and the magnetic attachment piece 20791 can attract each other through magnetic force, facilitating the installation and removal of the ventilation panel 207, thereby enhancing the convenience of installation and maintenance of the module assembly, reducing the installation and maintenance costs of module assembly, and ultimately improving user experience. In some embodiments of the present disclosure, the magnetic component 20691 is a magnet with magnetic properties, and the magnetic attachment piece 20791 is iron, cobalt, nickel and their alloys suitable for being attracted by the magnetic component 20691. In other embodiments of the present disclosure, the magnetic component 20691 and the magnetic attachment piece 20791 are magnets with opposite poles facing each other.

In some embodiments of the present disclosure, the first mounting portion 2069 includes a first mounting base 20692, the second mounting portion 2079 includes a second mounting base 20792. One of the magnetic component 20691 and the magnetic attachment piece 20791 is fixed to the first mounting base 20692, and the other one is fixed to the second mounting base 20792, so that the magnetic component 20691 and the magnetic attachment piece 20791 are fixed to the ventilation panel 207 and the heat dissipation end plate 206 respectively.

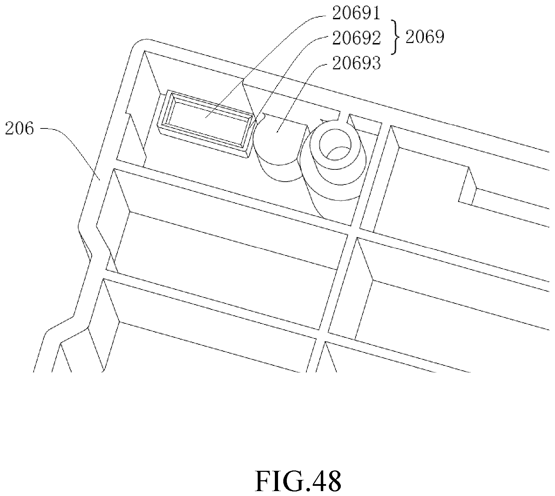

In one embodiment of the present disclosure, as shown in FIG. 47 and FIG. 48, the magnetic component 20691 is fixed to the first mounting base 20692 of the heat dissipation end plate 206, and the magnetic attachment piece 20791 is fixed to the second mounting base 20792 of the ventilation panel 207.

In another embodiment of the present disclosure (not shown in the FIG.), the magnetic attachment piece 20791 is fixed to the first mounting base 20692 of the heat dissipation end plate 206, and the magnetic component 20691 is fixed to the second mounting base 20792 of the ventilation panel 207.

In some embodiments of the present disclosure, both the magnetic component 20691 and the magnetic attachment piece 20791 can be strip-shaped structures. The first mounting base 20692 is configured to be a first mounting groove suitable for fixedly mating with the magnetic component 20691 or the magnetic attachment piece 20791. The magnetic component 20691 or the magnetic attachment piece 20791 can be connected to the first mounting groove by welding connection, buckle connection, bolt connection or adhesive connection, etc., the second mounting base 20792 is configured to be a second mounting groove suitable for fixedly mating with the magnetic component 20691 or the magnetic attachment piece 20791, and the magnetic component 20691 or the magnetic attachment piece 20791 can be connected to the second mounting groove by welding connection, buckle connection, bolt connection or adhesive connection, etc..

In some embodiments of the present disclosure, as shown in FIG. 12, FIG. 47, and FIG. 48, the first mounting base 20692 is located on the side of the heat dissipation end plate 206 towards the battery unit 220, and the second mounting base 20792 is located on the side of the ventilation panel 207 towards the heat dissipation end plate 206. After assembly of the heat dissipation end plate 206 and the ventilation panel 207, the first mounting base 20692 and the second mounting base 20792 are concealed.

In some embodiments of the present disclosure, as shown in FIG. 12, FIG. 47, and FIG. 48, the first mounting portion 2069 includes a first positioning component 20693, and the second mounting portion 2079 includes a second positioning component 20793. The first positioning component 20693 is suitable for positioning and mating with the second positioning component 20793, so that the magnetic component 20691 and the magnetic attachment piece 20791 are directly opposite and attracted to each other, ensuring that the ventilation panel 207 is accurately installed on the heat dissipation end plate 206.

In an embodiment, the positioning engagement between the first positioning component 20693 and the second positioning component 20793 can be a pin-and-hole lacating fit, or a slide-to-slot locating fit.

In some embodiments of the present disclosure, one of the first positioning component 20693 and the second positioning component 20793 is a positioning hole, while the other is a positioning pin corresponding to the positioning hole. The positioning hole and pin have a simple structure that is easy to manufacture and highly reliable. When the positioning hole is inserted into the positioning pin, the magnetic component 20691 and the magnetic attachment piece 20791 faces each other directly, facilitating the accurate installation of the ventilation panel 207 on the heat dissipation end plate 206, thus reducing the installation difficulty of the ventilation panel 207 and improving its installation efficiency.

In one embodiment of the present disclosure, as shown in FIG. 12, FIG. 47, and FIG. 48, the first positioning component 20693 is a positioning hole, and the second positioning component 20793 is a positioning pin.

In another embodiment of the present disclosure (not shown in the FIG.), the first positioning component 20693 is a positioning pin, and the second positioning component 20793 is a positioning hole.

In some embodiments of the present disclosure, as shown in FIG. 47, the positioning pin is provided with a guiding surface 20794, which is suitable for guiding engagement with the inner wall surface of the positioning hole, thereby facilitating the insertion of the positioning pin into the positioning hole and improving assembly efficiency. The guiding surface 20794 can be a conical guiding surface arranged at the end of the positioning pin facing the positioning hole. When the positioning pin is inserted into the positioning hole, the conical guiding surface enters the positioning hole first, and slides inward along the inner wall surface of the positioning hole, aligning the axis of the positioning pin with the axis of the positioning hole.

In some embodiments of the present disclosure, the cross-sectional shape of the positioning pin includes at least one of rectangular, circular, T-shaped, and cross-shaped. When the cross-section of the positioning pin is circular, the positioning pin and the positioning hole mated with the positioning pin facilitate processing and manufacturing. When the cross section of the positioning pin is rectangular, T-shaped, or cross-shaped, the positioning pin can be prevented from rotating or shaking in the positioning hole, thereby improving the reliability of the connection between the ventilation panel 207 and the heat dissipation end plate 206. It should be noted that the cross section of the positioning pin is the projection of the positioning pin on a plane perpendicular to its installation direction.

In some embodiments of the present disclosure, the ventilation panel 207 is provided with multiple second mounting portions 2079, such as 4 or 8, which are spaced apart along the circumference of the ventilation panel 207. The heat dissipation end plate 206 is provided with multiple first mounting portions 2069 corresponding one-to-one to the multiple second mounting portions 2079, thereby facilitating the improvement of the reliability of the connection between the ventilation panel 207 and the heat dissipation end plate 206 and preventing the ventilation panel 207 from falling off.

In some embodiments of the present disclosure, as shown in FIG. 47, the ventilation panel 207 includes a panel frame 2071 and a ventilation grill 2072 fixed to the panel frame 2071. The second mounting portions 2079 are arranged on the panel frame 2071 and the panel frame 2071 can be fixed to the heat dissipation end plate 206 through the second mounting portions 2079. The ventilation grill 2072 is hollowed out and can form an air duct, allowing the airflow blown out or sucked in by the driving fan 2061 to pass through the ventilation grill 2072, ensuring the heat dissipation effect of the battery module 201. At the same time, the ventilation grille 2072 can also protect the heat dissipation end plate 206 and prevent foreign objects from entering the driving fan 2061 and the battery unit 220 to ensure the safety and reliability of the battery module 201.

It should be noted that, compared to the service life of the battery unit 220, the driving fan 2061 is a wear part. When the driving fan 2061 requires maintenance or needs to be replaced due to failure, removing the ventilation panel 207 will expose the driving fan 2061 mounted on the heat dissipation end plate 206. The disassembly and assembly instructions for the driving fan 2061 located on the heat dissipation end plate 206 are positioned on the side of the end plate that faces away from the battery unit 220. In other words, the disassembly and assembly direction of the driving fan 2061 are on the side of the heat dissipation end plate 206 that faces the ventilation panel 207. This allows maintenance or replacement of the driving fan 2061 without having to remove the heat dissipation end plate 206, thereby improving the convenience of module assembly maintenance. As shown in FIG. 12, the driving fan 2061 is installed on the side of the heat dissipation end plate 206 opposite to the battery unit 220 through a plurality of second fasteners 20611, and the second fastener 20611 may be bolts. A energy storage cabinet 200 according to another embodiment of the present disclosure includes the module assembly of the mentioned embodiment.

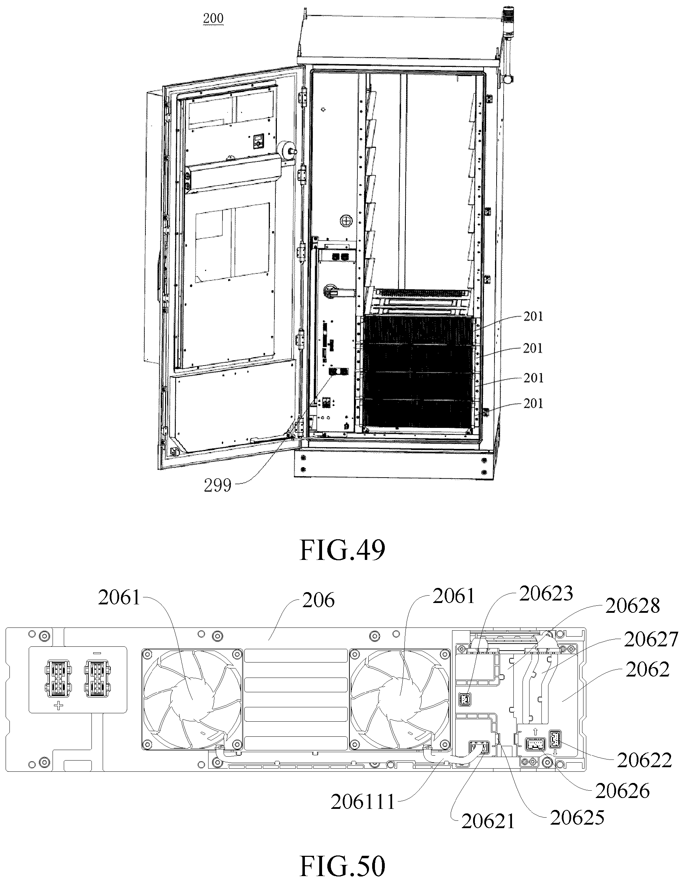

As shown in FIG. 49 and FIG. 30, multiple module assemblies can be arranged within the energy storage cabinet 200, and electrical connections are required between the battery modules 201 of these module assemblies. The connection terminals 202 for electrical connection of each battery module 201 can be at least partially penetrating through the heat dissipation end plate 206. The connection terminals 202 of adjacent two battery modules 201 can be connected by an electrical connection assembly 100. The ventilation panel 207 can shield the connection terminals 202 and at least part of the electrical connection assembly 100, preventing personnel from touching them, reducing the risk of electric shock. At the same time, when the number of battery modules 201 in the energy storage cabinet 200 needs to be increased or decreased, the connection terminals 202 on the heat dissipation end plate 206 can be exposed by removing the ventilation panel 207, facilitating the assembly and disassembly of the electrical connection assembly 100 and thus improving the convenience of maintenance of the energy storage cabinet 200. In an embodiment, the heat dissipation end plates 206 of each battery module 201 within the energy storage cabinet 200 can be arranged towards the cabinet door of the energy storage cabinet 200 to facilitate the disassembly and assembly of the ventilation panel 207 and the electrical connection assembly 100.

According to the energy storage cabinet 200 of the embodiment of the present disclosure, a heat dissipation end plate 206 is equipped with in its module assembly. The heat dissipation end plate 206 is provided with a driving fan 2061. The ventilation panel 207 is provided on the outside of the heat dissipation end plate 206.The ventilation panel 207 ensures the heat dissipation effect of the module assembly and prevents foreign objects from entering. The ventilation panel 207 can also improve the convenience of maintaining the module assembly, thereby enhancing its market competitiveness.

FIG. 49 to FIG. 52 will provide a detailed depiction of the energy storage cabinet 200 according to the embodiment of the present disclosure.

Referring to FIG. 49 to FIG. 52, the energy storage cabinet 200 including: a battery module 201 and a high-voltage power distribution box.

The battery module 201 includes a driving fan 2061 and an information collector (BIC) 2062. The information collector 2062 can sample parameters such as voltage and temperature of the battery cells in the battery module 201. The battery cells will generate heat during charging and discharging and the driving fan 2061 can be used to dissipate heat of the battery cells to maintain them at an appropriate operating temperature. The information collector 2062 includes an integrated output terminal 20621, a signal input terminal 20622 and a power supply input terminal 20623. The integrated output terminal 20621 is connected to both the signal input terminal 20622 and the power supply input terminal 20623.The driving fan 2061 is connected to the integrated output terminal 20621, and the information collector 2062 supplies power and provides control signal to the driving fan 2061 through the integrated output terminal 20621.

The high-voltage power distribution box 299 (PDU) includes a signal lead-out terminal and a power supply lead-out terminal. The signal lead-out terminal is connected to the signal input terminal 20622. The high-voltage power distribution box 299 provides control signal to the signal input terminal 20622 through the signal lead-out terminal. The power supply lead-out terminal is connected to the power supply input terminal 20623, and the high-voltage power distribution box 299 supplies power to the power supply input terminal 20623 through the power supply lead-out terminal. The high-voltage power distribution box 299 can generate control signal for controlling the driving fan 2061 based on the temperature of the battery cells. The control signal can be output from the signal lead-out terminal, flow into the information collector 2062 through the signal input terminal 20622, and then transmitted to the driving fan 2061 through the integrated output terminal 20621, thereby enabling regulation of the rotation speed of the driving fan 2061 to meet the heat dissipation requirements of the battery cells. At the same time, the high-voltage power distribution box 299 also supplies power to the driving fan 2061. The power supply current is outputted from the power supply lead-out terminal and flows into the information collector 2062 through the power supply input terminal 20623, and then transmitted to the driving fan 2061 through the integrated output terminal 20621, realizing power supply to the driving fan 2061.

It should be noted that the construction of the information collector 2062 can be a printed circuit board (PCB) and electronic components electrically connected. The integrated output terminal 20621, the signal input terminal 20622, and the power supply input terminal 20623 can all be sockets on the printed circuit board. The signal input terminal 20622 and the integrated output terminal 20621 are connected through the second internal conductive line in the printed circuit board, and the power supply input terminal 20623 and the integrated output terminal 20621 are connected through the third internal conductive line in the printed circuit board. The integrated output terminal 20621 can transmit both power supply current and control signal to the driving fan 2061. In an embodiment, the second internal conductive line and the third internal conductive line may be copper foil within the printed circuit board.

It can be understood that the information collector 2062 integrates part of the external line that supplies power to the driving fan 2061 and part of the external line that transmits the control information of the driving fan 2061, and outputs the power supply current and control signal through an integrated output terminal 20621, thereby helping to reduce the complexity of external line between the high-voltage power distribution box 299 and the battery module 201, and facilitating the layout and maintenance of the energy storage cabinet 200.

In some embodiments of the present disclosure, the battery module 201 further includes battery cells and a heat dissipation end plate 206. The heat dissipation end plate 206 is located on one side of the battery cell. Both the driving fan 2061 and the information collector 2062 are located on the heat dissipation end plate 206. The driving fan 2061 can be connected to the integrated output terminal 20621 through the external integrated line 206111, so that the driving fan 2061 receives the power supply current and control signal. The driving fan 2061 and the information collector 2062 can be arranged adjacent to each other to reduce the length of the external integrated line 206111. In addition, the battery module 201 can be equipped with one or more driving fans 2061 based on the heat dissipation requirements of the battery cells, all of which can be installed on the heat dissipation end plate 206. Furthermore, multiple driving fans 2061 on the heat dissipation end plate 206 can be connected to the integrated output terminal 20621 via the same external integrated line 206111, further reducing the complexity of the external line in the energy storage cabinet 200.

According to the energy storage cabinet 200 of the embodiment of the present disclosure, both the power supply current and the control signal of the driving fan 2061 pass through the information collector 2062 and are transmitted to the driving fan 2061 through the integrated output terminal 20621 of the information collection. This arrangement is conducive to reducing the complexity of external line in the energy storage cabinet 200 and facilitating its assembly, inspection, and maintenance.

In some embodiments of the present disclosure, as shown in FIG. 49 and FIG. 50, the energy storage cabinet 200 includes a plurality of battery modules 201 stacked along a first direction, and the information collector 2062 of each battery module 201 are aligned in the first direction. The power supply input terminal 20623 of each battery module 201 are connected to the power supply lead-out terminal via a first external power supply line, which facilitates the layout of the first external power supply lines within the energy storage cabinet 200 and reduces the bending of these lines.

The first direction can be the height direction of the energy storage cabinet 200. That is to say, the multiple battery modules 201 within the energy storage cabinet 200 can be stacked along the height direction of the energy storage cabinet 200, and the heat dissipation end plates 206 with the driving fans 2061 and information collector 2062 of each battery module 201 facing the same direction and are aligned along the stacking direction. This arrangement benefits the layout of the first external power supply line within the energy storage cabinet 200, reducing the bending of the first external power supply line.

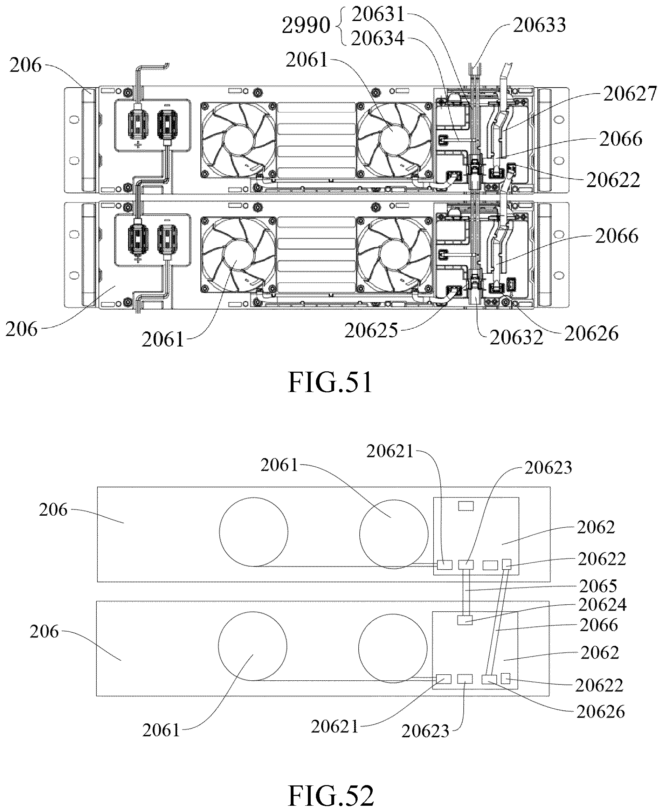

In some embodiments of the present disclosure, as shown in FIG. 51, the first external power supply line includes a plurality of power supply branches 2990, and the number of power supply branches 2990 corresponds to the number of battery modules 201. In other words, the number of the power supply branches 2990 is the same as the number of battery modules 201. Each power supply branch 2990 includes a branch main-line 20631 and a branch sub-line 20634 connected in parallel with the branch main-line 20631. The branch main-lines 20631 of multiple power supply branches 2990 are connected in sequence to form a main power supply circuit. The branch sub-lines 20634 of multiple power supply branches 2990 are respectively connected to corresponding power supply input terminals 20623, thereby achieving the parallel connection of the driving fans 2061 on each battery module 201 with the main power supply circuit.

It can be understood that the number of battery modules 201 in the energy storage cabinet 200 can be adjusted according to the battery demand. The first external power supply line is divided into detachable multiple power supply branches 2990, and the number of power supply branches 2990 can correspond to the number of battery modules 201.This arrangement ensures that when there are fewer battery modules 201 within the energy storage cabinet 200, the redundancy and waste of the first external power supply line can be avoided, thereby reducing the cost of the energy storage cabinet 200 and the complexity of external line in the energy storage cabinet 200 and facilitating its assembly, inspection, and maintenance.

In some embodiments of the present disclosure, as shown in FIG. 51, a male connector 20632 is provided at one end of the branch main-line 20631, and a female connector 20633 is provided at the other end. Among the adjacent two branch main-lines 20631, the male connector 20632 of one branch main-line 20631 plugged and connected with the female connector 20633 of the other branch main-line 20631, which facilitates the installation, disassembly, and maintenance of multiple branch main-lines 20631.

In some embodiments of the present disclosure, as shown in FIG. 50 and FIG. 51, the information collector 2062 also includes a clamping socket 20625, and the male connector 20632 and/or the female connector 20633 are suitable for being fixed with the clamping socket 20625. In other words, either the male connector 20632 or the female connector 20633 is suitable for being fixed with the clamping socket 20625, or both the male connector 20632 and the female connector 20633 are suitable for being fixed with the clamping socket 20625, there by facilitating the control of the routing of the first external power supply line and avoiding heat generation and signal interference caused by the cross of the first external power supply line. At the same time, it can also prevent the male connector 20632 and the female connector 20633 from loosening at the connection point, and improve the reliability of the plug-in connection between the male connector 20632 and the female connector 20633. In an embodiment, the clamping socket 20625 can be fixed to the outer side of the printed circuit board of the information collector 2062.

In some embodiments of the present disclosure, the information collector 2062 further includes a first fuse, the first fuse is connected in series in the circuit between the power supply input terminal 20623 and the integrated output terminal 20621, thereby providing overload protection for the driving fan 2061. When the current between the power supply input terminal 20623 and the integrated output terminal 20621 abnormally rises to the first preset current threshold, the electrical connection between the power supply input terminal 20623 and the integrated output terminal 20621 is disconnected, thereby enhancing the service life and reliability of the driving fan 2061.

In some embodiments of the present disclosure, the first fuse is a self-recovery fuse. When a short circuit or overcurrent occurs in the circuit between the power supply input terminal 20623 and the integrated output terminal 20621, a large current flowing through the first fuse causes the first fuse to form a high-resistance state, thereby limiting and protecting the circuit between the power supply input terminal 20623 and the integrated output terminal 20621. After the fault is eliminated, the first fuse returns to a low-resistance state, allowing the circuit between the power supply input terminal 20623 and the integrated output terminal 20621 to conduct, thereby avoiding manual replacement of the first fuse and reducing the maintenance cost of the energy storage cabinet 200.

In other embodiments of the present disclosure, as shown in FIG. 49 and FIG. 52, the information collector 2062 further includes a power supply output terminal 20624 and a first internal conductive line. The power supply output terminal 20624 is connected to the power supply input terminal 20623 through the first internal conductive line. The integrated output terminal 20621 is connected in parallel with the first internal conductive line. The energy storage cabinet 200 includes a plurality of battery modules 201 stacked along the first direction, and the information collector 2062 of each battery module 201 is aligned in the first direction. The power supply input terminal 20623 of one of the multiple battery modules 201 is connected to the power supply lead-out terminal, while the power supply input terminals 20623 of the remaining battery modules 201 are connected to the power supply output terminals 20624 of the upstream adjacent battery modules 201 through second external power supply line 2065, reducing the length of the second external power supply line 2065 and facilitating their layout in the energy storage cabinet 200. It can be understood that the upstream adjacent battery module 201 refers to the adjacent battery module 201 through which the power supply current flows first.

It should be noted that the construction of the information collector 2062 can be a printed circuit board (PCB) and electronic components electrically connected. The integrated output terminal 20621, the signal input terminal 20622, the power supply input terminal 20623, and the power supply output terminal 20624 can all be sockets on the printed circuit board. The power supply output terminal 20624 and the power supply input terminal 20623 are connected through the first internal conductive line in the printed circuit board, and the signal input terminal 20622 and the integrated output terminal 20621 are connected through the second internal conductive line in the printed circuit board. The integrated output terminal 20621 is connected in parallel with the first internal conductive line through the third internal conductive line. The integrated output terminal 20621 can transmit both power supply current and control signal to the driving fan 2061. In an embodiment, the first internal conductive line, the second internal conductive line and the third internal conductive line may be copper foil within the printed wiring board.

The multiple battery modules 201 within the energy storage cabinet 200 can be stacked along the height direction of the energy storage cabinet 200, and the heat dissipation end plates 206 with the driving fans 2061 and information collector 2062 of each battery module 201 facing the same direction and are aligned along the stacking direction. This arrangement benefits the layout of the second external power supply line 2065 within the energy storage cabinet 200, reducing the bending of the second external power supply line 2065. At the same time, the number of second external power supply lines 2065 can be the same as the number of battery modules 201. Both ends of the second external power supply line 2065 are respectively connected to the power supply input terminal 20623 and the power supply output terminal 20624 of the adjacent battery module 201 to connect the first internal conductive lines in two adjacent battery modules 201 and form a main power supply circuit. At the same time, the integrated output terminal 20621 of each battery module 201 is also connected in parallel with the first internal conductive line to realize that the driving fan 2061 on each battery module 201 is connected in parallel with the main power supply circuit.

In some embodiments of the present disclosure, the number of battery modules 201 in the energy storage cabinet 200 can be adjusted according to the power demand. The battery module 201 closest to the high-voltage power distribution box 299 within the energy storage cabinet 200 can be designated as the most upstream battery module. The power supply input terminal 20623 of the most upstream battery module is connected to the power supply lead-out terminal, while the power supply input terminal 20623 of the remaining battery modules 201 are connected to the power supply output terminal 20624 of their upstream adjacent battery modules 201 through the second external power supply line 2065. The number of the second external power supply lines 2065 corresponds to the number of battery modules 201. This arrangement ensures that when there are fewer battery modules 201 within the energy storage cabinet 200, the redundancy and waste of the second external power supply line 2065 can be avoided, thereby reducing the cost of the energy storage cabinet 200 and the complexity of external line in the energy storage cabinet 200 and facilitating its assembly, inspection, and maintenance.

For example, the energy storage cabinet 200 contains a first battery module, a second battery module and a third battery module stacked in sequence from bottom to top. The first battery module, located at the bottom, is closest to the high-voltage power distribution box 299 and serves as the most upstream battery module. The power supply input terminal 20623 of the first battery module is connected to the power supply lead-out terminal. The power supply input terminal 20623 of the second battery module is connected to the power supply output terminal 20624 of the first battery module connected to its upstream through a second external power supply line 2065. Similarly, the power supply input terminal 20623 of the third battery module is connected to the power supply output terminal 20624 of the upstream second battery module through another second external power supply line 2065. The power supply current flows sequentially through the information collector 2062 of the first battery module, second battery module, and third battery module from the power supply lead-out terminal.

Furthermore, as shown in FIG. 4, among the multiple battery modules 201 within the energy storage cabinet 200, the power supply output terminal 20624 of one battery module 201 is close to the power supply input terminal 20623 of another adjacent battery module 201, which is beneficial to reducing the length of the second external power supply line 2065, facilitating the layout of the second external power supply line 2065, and preventing interference between multiple second external power supply lines 2065.

In some embodiments of the present disclosure, the information collector 2062 further includes a second fuse, the second fuse is connected in series in the circuit between the power supply input terminal 20623 and the power supply output terminal 20624 to provide overload protection for each information collector 2062 within the main power supply circuit. When the current between the power supply input terminal 20623 and the power supply output terminal 20624 abnormally rises to the second preset current threshold, the second fuse can disconnect the electrical connection between the power supply input terminal 20623 and the power supply output terminal 20624, thereby enhancing the service life and reliability of the second external power supply line 2065.

In some embodiments of the present disclosure, the second fuse is a self-recovery fuse. When a short circuit or overcurrent occurs in the circuit between the power supply input terminal 20623 and the power supply output terminal 20624, a large current flowing through the second fuse causes the second fuse to form a high-resistance state, thereby limiting and protecting the circuit between the power supply input terminal 20623 and the power supply output terminal 20624. After the fault is eliminated, the second fuse returns to a low-resistance state, allowing the circuit between the power supply input terminal 20623 and the power supply output terminal 20624 to conduct, thereby avoiding manual replacement of the second fuse and reducing the maintenance cost of the energy storage cabinet 200.

In some embodiments of the present disclosure, as shown in FIG. 50, FIG. 51, and FIG. 52, the information collector 2062 also includes a signal output terminal 20626. Among multiple battery modules 201, the signal input terminal 20622 of one information collector 2062 is connected to the signal lead-out terminal, while the signal input terminal 20622 of the remaining information collector 2062 are connected to the signal output terminals 20626 of the upstream adjacent battery modules 201 through external signal lines 2066. This arrangement reduces the length of the external signal lines 2066 and facilitates the layout of the second external power supply lines 2065 within the energy storage cabinet 200. It can be understood that the upstream adjacent battery module 201 refers to the adjacent battery module 201 through which the power supply current flows first.

It can be understood that the number of battery modules 201 in the energy storage cabinet 200 can be adjusted according to the power demand. The battery module 201 closest to the high-voltage power distribution box 299 within the energy storage cabinet 200 can be designated as the most upstream battery module. The signal input terminal 20622 of the most upstream battery module is connected to the signal lead-out terminal, while the signal input terminal 20622 of the remaining battery modules 201 are connected to the signal output terminals 20626 of their upstream adjacent battery modules 201 via the external signal lines 2066. The number of external signal lines 2066 corresponds to the number of battery modules 201. This arrangement ensures that when there are fewer battery modules 201 in the energy storage cabinet 200, the redundancy and waste of the external signal lines 2066 can be avoided, thereby reducing the cost of the energy storage cabinet 200 and the complexity of external line in the energy storage cabinet 200 and facilitating its assembly, inspection, and maintenance.

For example, the energy storage cabinet 200 contains a first battery module, a second battery module and a third battery module stacked in sequence from bottom to top. The first battery module, located at the bottom, is closest to the high-voltage power distribution box 299 and serves as the most upstream battery module. The signal input terminal 20622 of the first battery module is connected to the signal lead-out terminal. The signal input terminal 20622 of the second battery module is connected via an external signal line 2066 to the signal output terminal 20626 of the first battery module connected to its upstream. Similarly, the signal input terminal 20622 of the third battery module is connected via another external signal line 2066 to the signal output terminal 20626 of the upstream second battery module. Control information can be transmitted from the signal lead-out terminal to the information collector 2062 of the first battery module, the second battery module, and the third battery module.

In some embodiments of the present disclosure, the control signal includes ID information and control information. When receiving and transmitting the control signal, the information collector 2062 of each battery module 201 can process the control signal to identify whether the ID information in the control signal matches its own. If the ID information matches, the control information corresponding to the ID information will be sent to the driving fan 2061 connected to it. If the ID information does not match, no response will be made.

For example, when the high-voltage power distribution box 299 needs to control the driving fan 2061 of the first battery module to increase the rotation speed by 5%, the high-voltage power distribution box 299 generates a first control signal. The first control signal includes the ID information of the information collector 2062 of the first battery module, as well as the control information to increase the rotation speed of the driving fan 2061 by 5%. The first control signal can be broadcast to the information collector 2062 of the first battery module, the second battery module, and the third battery module. The information collector 2062 of the first battery module recognizes that the ID information matches and sends the corresponding control information to the driving fan 2061 connected to its integrated output terminal 20621, thus increasing the rotation speed of the driving fan 2061 of the first battery module by 5%.

In some embodiments of the present disclosure, as shown in FIG. 50 and FIG. 51, the information collector 2062 also includes a first clamping groove 20627, the first clamping groove 20627 can be used to fix the external signal line 2066, facilitating controlling the routing of the external signal line 2066.

In some embodiments of the present disclosure, as shown in FIG. 50 and FIG. 51, the information collector 2062 further includes a second clamping groove 20628, the second clamping groove 20628 can be used to fix the power supply branch 2990, facilitating controlling the routing of the power supply branch 2990.

In some embodiments of the present disclosure, a switching power supply can be integrated into the high-voltage power distribution box 299, the switching power supply converts 220V AC mains power through AC-DC conversion to output 24V DC power from the power supply lead-out terminal.

In other embodiments of the present disclosure, a BMS (Battery Management System) mainboard can be integrated into the high-voltage power distribution box 299. The BMS mainboard can take samples from the battery cells of the battery module 201 and output 24V DC power through the power supply lead-out terminal.

In some embodiments of the present disclosure, as shown in FIG. 49, the high-voltage power distribution box 299 is provided on the left part of the energy storage cabinet 200 (i.e., to the left side of the battery module 201). The high-voltage power distribution box 299 can route the main power supply line and main control line from below the battery module 201. The main power supply line is equipped with a power supply lead-out terminal, and the main control line is equipped with a signal lead-out terminal.

In the description of this specification, reference to the terms "one embodiment," "some embodiments," "illustrative embodiments," "examples," "specific examples," or "some examples" is intended to signify that specific features, structures, materials, or characteristics that is included in at least one embodiment or example of the present disclosure. In this specification, schematic representations of the above terms do not necessarily refer to the same embodiment or example. Furthermore, the specific features, structures, materials or characteristics described may be combined in any suitable manner in any one or more embodiments or examples.

Although the embodiments of the present disclosure have been shown and described, a person of ordinary skill in the art should understand that various changes, modifications, replacements and variations may be made to the embodiments without departing from the principles and purposes of the present disclosure. The scope of the disclosure is defined by the claims and their equivalents.

## Claims

1. An energy storage cabinet, comprising:
a cabinet (60), a first space (40) and a second space (41) being formed in the cabinet (60);
a plurality of battery modules (201), the plurality of battery modules (201) being arranged in the first space (40), the plurality of battery modules (201) being stacked in a first direction of the energy storage cabinet (200), the first space (40) and the second space (41) being arranged side by side in a second direction perpendicular to the first direction;
a control unit (1000), the control unit (1000) being arranged in the second space (41) and being electrically connected to the battery module (201).

2. The energy storage cabinet according to claim 1, wherein the second space (41) is suitable for guiding airflow into the first space (40).

3. The energy storage cabinet according to claim 2, wherein the first space (40) communicates with the second space (41).

4. The energy storage cabinet according to any one of claims 1to 3, wherein a third space (42) is formed within the cabinet (60), the third space (42) communicates with the first space (40) and the second space (41), and air in the second space (42) is adapted to flowing into the first space (40) through the third space (42).

5. The energy storage cabinet according to claim 4, wherein a first channel (43) is formed in the cabinet (60), the first channel (43) and the first space (40) are arranged along the first direction, and the first channel (43) communicates with the first space (40) and/or the third space (42).

6. The energy storage cabinet according to claim 5, whereinthe cabinet (60) has a base and a top plate spaced apart in the first direction, and the first channel (43) is located between the top plate and the base.

7. The energy storage cabinet according to claim 5, further comprising:
an air conditioner (50), the air conditioner (50) has an air outlet (51) and an air inlet (52), the air outlet (51) communicates with the second space (41) and/or the first channel (43), and the air inlet (52) communicates with the first space (40).

8. The energy storage cabinet according to claim 7, wherein an end of the first space (40) close to the air inlet (52) is open to form a first opening, and an end of the second space (41) close to the air outlet (51) is open to form a second opening, the first opening and the second opening are separated by a spacer.

9. The energy storage cabinet according to claim 4, wherein the third space (42) and the first space (40) are arranged in a third direction of the energy storage cabinet, and the third direction is orthogonal to both the first direction and the second direction.

10. The energy storage cabinet according to any one of claims 1 to 9, further comprising:
a positive power line (1001) and a negative power line (1002), wherein one end of the positive power line (1001) is connected to the control unit (1000), and the other end of the positive power line (1001) is adapted to plugging into a connection terminal (202) of the battery modules (201);
one end of the negative power line (1002) is connected to the control unit (1000), and the other end of the negative power line (1002) is suitable for plugging into the connection terminal (202) of the battery modules (201).

11. The energy storage cabinet according to claim 10, one end of the positive power line (1001) and one end of the negative power line (1002) are both located in the second space (41), the other end of the positive power line (1001) and the other end of the negative power line (1002) are both located in the first space (40).

12. The energy storage cabinet according to any one of claims 1 to 11, wherein the battery module (201) comprises battery unit (220), the battery unit (220) comprises a plurality of battery cells (208), the plurality of the battery cells (208) are arranged sequentially along a thickness direction of the battery cell (208), and a first air duct (210) extending along a third direction is formed between at least two adjacent battery cells (208), the third direction is orthogonal to both the first direction and the second direction, and the first air duct (210) is communicated with the first space (40).

13. The energy storage cabinet according to claim 12, wherein the battery module (201) further comprises:
a first side plate (211) and a second side plate (212), the battery unit (220) is disposed between the first side plate (211) and the second side plate (212);
a support beam (219), the support beam (219) extends along the thickness direction of the battery cells (208) and connects the first side plate (211) and the second side plate (212) so that the first side plate (211) and the second side plate (212) clamp the battery unit (220) , and the support beam (219) is located on at least one side of the battery unit (220) in the width direction of the battery cells (208).

14. The energy storage cabinet according to claim 13, the battery module (201) further comprises a top cover (213) and a bottom cover (214), the top cover (213) and the bottom cover (214) are both connected with the first side plate (211) and the second side plate (212), and the battery unit (220) is located between the top cover (213) and the bottom cover (214), a second air duct (216) is formed between the top cover (213) and the battery unit (220) and/or between the bottom cover (214) and the battery unit (220) by the separating action of the support beam (219), and the second air duct (216) is connected to the first space (40).

15. The energy storage cabinet according to claim 14, wherein the support beam (219) is in contact with a surface of the battery unit(220) close to the top cover (213) and the top cover (213), and/or, the support beam (219) is in contact with the surface of the battery unit (220) close to the bottom cover (214) and the bottom cover (214), in order to divided the second air duct (216) into a plurality of sub-air ducts (217), the support beam (219) has an air passage (218) that connects adjacent two sub-air ducts (217).

16. The energy storage cabinet according to claim 14, wherein the battery module (201) is provided with an air supply hole (215), the air supply hole (215) is communicated with the first space (40) and the second air duct (216).

17. The energy storage cabinet according to claim 12, wherein the battery module (201) further comprises a heat sink (209), the heat sink (209) is disposed between at least adjacent two battery cells (208), the heat sink (209) defines the first air duct (210).

18. The energy storage cabinet according to claim 17, wherein a plurality of the battery cells (208) form a plurality of battery cell (208) groups, each group comprises at least one battery cell (208), and the heat sink (209) is disposed between adjacent two battery cell groups.

19. The energy storage cabinet according to claim 13, wherein the battery module (201) further comprises a driving fan (2061), in a length direction of the battery cell (208), the driving fan (2061) is arranged at one end of the battery unit (220) and is spaced apart from the battery unit (220), the driving fan (2061) is used to drive air to flow along the first air duct within the first air duct (210).

20. The energy storage cabinet according to claim 19, wherein the battery module (201) further comprises a temperature detection component, the temperature detection component is used to detect a temperature of the battery module (201), both the driving fan (2061) and the temperature detection component are suitable for connection with a battery management system of the battery module (201), the battery management system is used to control a working mode of the driving fan (2061) by receiving temperature information detected by the temperature detection component.

21. The energy storage cabinet according to claim 19, wherein the battery module (201) further comprises a heat dissipation end plate (206), the driving fan (2061) is mounted on the heat dissipation end plate (206), the heat dissipation end plate (206) is fixedly connected to the first side plate (211) and/or the second side plate (212).

22. The energy storage cabinet according to claim 21, wherein the battery module (201) further comprises a fixing plate (2065), the fixing plate (2065) is installed on the first side plate (211) and/or the second side plate (212), the fixing plate (2065) is provided with a handle (2066).

23. The energy storage cabinet according to claim 21, wherein the heat dissipation end plate (206) is equipped with a positive connection terminal (2029) and a negative connection terminal (2030), the positive connection terminal (2029) is connected to a total positive output pole of the battery unit (220), the negative connection terminal (2030) is connected to a total negative output pole of the battery unit (220), in the second direction, the positive connection terminal (2029) and the negative connection terminal (2030) are arranged close to a same side of the heat dissipation end plate (206).

24. The energy storage cabinet according to claim 23, wherein the heat dissipation end plate (206) defines a mounting groove (2063), both the positive connection terminal (2029) and the negative connection terminal (2030) are located in the mounting groove (2063) .

25. The energy storage cabinet according to claim 24, wherein the heat dissipation end plate (206) further defines a fool-proof slot (203), the fool-proof slot (203) is communicated with the mounting groove (2063), and the fool-proof slot (203) is used for wiring;
the heat dissipation end plate (206) further defines a wiring slot (2064), the wiring slot (2064) is communicated with the mounting groove (2063), the fool-proof slot (203) and the wiring slot (2064) are located on opposite sides of the mounting groove (2063).

26. The energy storage cabinet according to claim 21, wherein the battery module (201) further comprises a ventilation panel (207), the ventilation panel (207) is disposed on a side of the driving fan (2061) away from the battery unit (220), and the ventilation panel (207) is equipped with an air outlet hole (20722).

27. The energy storage cabinet according to claim 12, wherein a length dimension of the battery cell (208) is E, E satisfies the relationship: 400mm≤E≤1500mm;
the width dimension of the battery cell (208) is F, F satisfies the relationship: 70mm≤F≤ 150mm;
the thickness dimension of the battery cell (208) is G, G satisfies the relationship: 10mm≤ G≤25mm.

28. The energy storage cabinet according to any one of claims 1 to 27, further comprising:
an electrical connection assembly (100), the electrical connection assembly (100) is used to electrically connect two of the battery modules (201), and the electrical connection assembly (100) is plug-connected with the battery module (201).

29. The energy storage cabinet according to claim 28, wherein the electrical connection assembly (100) comprises a conductive bar (10) and an insulating cover (20), the conductive bar (10) is suitable for plugging and mating with two adjacent battery modules (201) to enable the electrical connection between the two adjacent battery modules (201), and the insulating cover (20) is covered on the conductive bar (10) and is suitable for connection with the battery module (201).

30. The energy storage cabinet according to claim 26, wherein the heat dissipation end plate (206) is equipped with a first mounting portion (2069), the ventilation panel (207) shields the driving fan (2061), and the ventilation panel (207) is equipped with a second mounting portion (2079) that corresponds to and is engaged with the first mounting portion (2069).

31. The energy storage cabinet according to claim 30, wherein one of the first mounting portion (2069) and the second mounting portion (2079) is equipped with a magnetic component (20691), and the other is equipped with a magnetic attachment piece (20791), the ventilation panel (207) and the heat dissipation end plate (206) are connected through magnetic attraction through the magnetic component (20691) and the magnetic attachment piece (20791).

32. The energy storage cabinet of claim 19, wherein the battery module further comprises:
an information collector (2062), the information collector (2062) comprising an integrated output terminal (20621), a signal input terminal (20622) and a power supply input terminal (20623), the integrated output terminal (20621) is connected to the signal input terminal (20622) and the power supply input terminal (20623), the driving fan (2061) is connected to the integrated output terminal (20621), and the information collector (2062) supplying power and providing control signal to the driving fan (2061) through the integrated output terminal (20621);
a high-voltage power distribution box (299), the high-voltage power distribution box (299) comprises a signal lead-out terminal and a power supply lead-out terminal, the signal lead-out terminal is connected to the signal input terminal (20622), and the high-voltage power distribution box provides the control signal to the signal input terminal (20622) through the signal lead-out terminal, the power supply lead-out terminal is connected to the power supply input terminal (20623), and the high-voltage power distribution box supplies the power to the power supply input terminal (20623) through the power supply lead-out terminal.

33. The energy storage cabinet according to claim 32, wherein the information collector (2062) of each battery module (201) is aligned in the first direction, and the power supply input terminals (20623) of the plurality of battery modules (201) are connected to the power supply lead-out terminal through a first external power supply line.

34. The energy storage cabinet according to claim 33,wherein the first external power supply line comprises a plurality of power supply branches (2990), the number of the power supply branches (2990) corresponds to the number of the battery modules (201),each power supply branch (2990) comprises a branch main-line (20631) and a branch sub-line (20634) in parallel to the branch main-line (20631), the branch main-lines (20631) of the plurality of power supply branches (2990) are connected sequentially, the branch sub-lines (20634) of the plurality of power supply branches (2990) are respectively connected to the corresponding power supply input terminals (20623).
